# FASCICULE DE BREVET EUROPEEN

(11) **EP 4 655 156 B1**
(45) Date de publication et mention de la délivrance du brevet: **25.11.2026**
(21) Numéro de dépôt: 24705715.1
(22) Date de dépôt: 25.01.2024
(51) Int. Cl.: B29C 70/38, B29B 11/16, B32B 38/00, F01D 9/04, F01D 5/02, F01D 5/06, F01D 5/14, F01D 11/00

(54) **ANNEAU D'ECARTEMENT EN MATERIAU COMPOSITE ET SON PROCEDE DE FABRICATION**
VERBUNDDISTANZRING UND HERSTELLUNGSVERFAHREN DAFÜR
COMPOSITE SPACER RING AND PRODUCTION METHOD THEREOF

(30) Priorité: 25.01.2023 FR 2300687
(43) Date de publication de la demande: 03.12.2025
(73) Titulaire: SAFRAN, 75015 Paris (FR)
(72) Inventeur: MERCIER, Rémi Roland Robert, 77550 Moissy-Cramayel (FR); DUNLEAVY, Patrick, 77550 Moissy-Cramayel (FR); GALLET, Julien Philippe, 77550 Moissy-Cramayel (FR)
(74) Mandataire: Regimbeau
(86) Numéro de dépôt international: PCT/FR2024/050106
(87) Numéro de publication internationale: WO 2024/156968

(56) Documents cités:
- EP-A1- 3 473 415
- US-A1- 2011 103 726
- US-A1- 2019 168 419

## Description

### DOMAINE DE L'INVENTION

La présente invention concerne les anneaux d'écartement pour soufflante de turbomachine et plus particulièrement leur procédé de fabrication.

### ARRIERE-PLAN TECHNOLOGIQUE

Les rotors de soufflante de turbomachine comprennent le plus souvent un disque de soufflante avec une pluralité d'aubes fixées au disque et s'étendant selon des directions sensiblement radiales à partir du disque. Ils comprennent également des plateformes inter-aubes interposées entre les aubes pour délimiter intérieurement la veine d'écoulement secondaire. Ces plateformes inter-aubes sont rendues solidaires du disque par une bride de retenue amont et une bride de retenue aval.

Un type de bride de retenue aval est constitué par les anneaux d'écartement rotatif, mieux connus sous leur appellation anglaise « rotating spacer » ou « flow-path spacer ». Ces anneaux d'écartement rotatif comprennent une virole radiale fixée à une pièce solidaire du disque et prolongé d'une bague faisant saillie axialement vers l'amont. Ladite bague est définie par révolution d'une génératrice globalement en forme de V pointant vers l'amont. Cette bague comprend une jambe intérieure définissant un épaulement axial orienté vers l'intérieur qui vient en appui contre les plateformes inter-aubes et une jambe extérieure qui définit une surface externe globalement tronconique délimitant intérieurement la veine d'écoulement secondaire. La jambe externe est prolongée d'un appendice formant crochet pour assurer l'étanchéité entre le rotor de soufflante et le carter de la turbomachine.

Traditionnellement, les anneaux d'écartement rotatif sont réalisés en métal, le plus souvent en titane. Récemment, il a été proposé, pour les alléger, de les réaliser en matériau composite en utilisant la technique de moulage par transfert de résine.

Cependant, produire des anneaux d'écartement rotatif en utilisant le moulage par transfert de résine ne donne pas entière satisfaction. En effet, ce procédé est coûteux et complexe à mettre en œuvre.

On connaît par ailleurs une technique de fabrication de préformes composites, appelée « placement automatique de fibres » (mieux connue sous l'acronyme AFP de l'anglais « Automatic Fiber Placement »), dans laquelle une machine de drapage dépose sur un support une bande constituée de plusieurs rubans étroits (généralement d'une largeur de 3 à 13 mm) juxtaposés, appelés « mèches » (« tows » en anglais), par l'intermédiaire d'une tête de pose. Ces mèches sont constituées de fibres orientées suivant la direction d'élongation de la mèche et noyées dans une matrice. Elles sont introduites dans la tête par un système d'alimentation qui contient plusieurs bobines contenant chacune l'une des mèches à poser. Les mèches sont déroulées des bobines et conduites jusqu'à la tête qui les chauffe juste avant qu'un rouleau vienne les plaquer sur le support. La tête est reliée à un robot qui la positionne durant le drapage et l'ensemble est piloté par un programme informatique qui a été défini en fonction de l'alignement des fibres souhaité dans le produit final. Le placement automatique de fibres permet ainsi une très grande reproductibilité dans la production de pièces en matériau composite.

Dans le domaine aéronautique, cette technique est généralement employée pour réaliser des éléments de géométrie simple et de grande dimension, comme des éléments de voilure ou de fuselage.

En revanche, du fait des contraintes posées par les dimensions des rouleaux et la largeur des mèches, le placement automatique de fibres est généralement considéré comme n'étant pas adapté à la réalisation de pièces petites ou à géométrie complexe, comme les anneaux d'écartement rotatif, car de telles pièces nécessiteraient des stratégies de dépose et/ou de découpe spécifiques, non immédiates.

US 2011/103726 A1 divulgue un procédé de fabrication d'un anneau d'écartement en matériau composite pour soufflante de turbomachine.

### EXPOSE DE L'INVENTION

Un objectif de l'invention est de simplifier et automatiser la fabrication des anneaux d'écartement rotatif de manière de réduire leur coût.

A cet effet, l'invention a pour objet, selon un premier aspect, un procédé selon la revendication 1.

Selon des modes de réalisation particuliers de l'invention, le procédé de fabrication présente également l'une ou plusieurs des caractéristiques suivantes, prise(s) isolément ou suivant toute(s) combinaison(s) techniquement possible(s) :
- le drapage de mèches de préimprégné sur le moule de peau produit une ébauche de préforme annulaire, la préparation de la préforme de peau amont et/ou la préparation de la préforme de peau aval comprenant, suite audit drapage, la mise en forme de l'ébauche de préforme de manière à former la préforme de peau amont, respectivement la préforme de peau aval ;
- la mise en forme de l'ébauche de préforme est réalisée par thermoformage ;
- le moule de peau a une forme de révolution centrée sur un axe de révolution, un repère cylindrique étant attaché au moule de peau avec en chaque point une direction axiale parallèle à l'axe de révolution, une direction radiale reliant l'axe de révolution audit point et une direction circonférentielle orthogonale aux directions axiale et radiale, chaque mèche de préimprégné étant drapée suivant une direction formant en chaque point un angle non nul avec la direction circonférentielle locale ;
- pour au moins un empilement, le bord axial défini par drapage est incurvé, le bord axial usiné étant droit, ou le bord axial défini par drapage est incliné, le bord axial usiné étant radial ;
- plusieurs empilements sont réalisés, lesdits empilements comprenant un empilement intérieur et un empilement extérieur radialement superposé à l'empilement intérieur, le bord axial usiné de l'empilement intérieur étant obtenu par découpe franche de l'empilement intérieur selon une surface de découpe primaire et le bord axial usiné de l'empilement extérieur étant obtenu par découpe franche de l'empilement extérieur selon une surface de découpe secondaire différente de la surface de découpe primaire ;
- le bord axial défini par drapage de l'empilement extérieur prolonge radialement le bord axial usiné de l'empilement intérieur, la surface de découpe secondaire prolongeant radialement le bord axial défini par drapage de l'empilement intérieur ;
- le bord axial défini par drapage de l'empilement extérieur prolonge radialement le bord axial défini par drapage de l'empilement intérieur, la surface de découpe secondaire prolongeant radialement le bord axial usiné de l'empilement intérieur ;
- le bord axial usiné est obtenu par découpe franche de l'empilement selon une surface de découpe radiale ou tronconique ; et
- l'anneau d'écartement est un anneau d'écartement rotatif.

L'invention a également pour objet, selon un deuxième aspect, un anneau d'écartement obtenu au moyen d'un tel procédé.

L'invention a encore pour objet, selon un troisième aspect, un rotor de soufflante comprenant un tel anneau d'écartement.

Selon un quatrième aspect, l'invention a pour objet une turbomachine comprenant un tel rotor de soufflante.

Selon un cinquième aspect, l'invention a pour objet un aéronef comprenant une telle turbomachine.

### BREVE DESCRIPTION DES FIGURES

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue de dessus d'un aéronef selon un exemple de réalisation l'invention,
- la Figure 2 est une vue simplifiée en coupe d'une turbomachine de l'aéronef de la Figure 1,
- la Figure 3 est une vue d'un détail marqué III de la Figure 2,
- la Figure 4 est une vue en coupe d'un anneau d'écartement rotatif de la turbomachine de la Figure 2,
- la Figure 5 est un diagramme illustrant un procédé de fabrication de l'anneau d'écartement rotatif de la Figure 4,
- la Figure 6 est un diagramme illustrant une étape de préparation d'une préforme d'insert du procédé de fabrication de la Figure 5, et
- les Figures 7 à 25 illustrent différentes étapes et sous-étapes du procédé de fabrication de la Figure 5.

### DESCRIPTION DETAILLEE D'UN EXEMPLE DE REALISATION

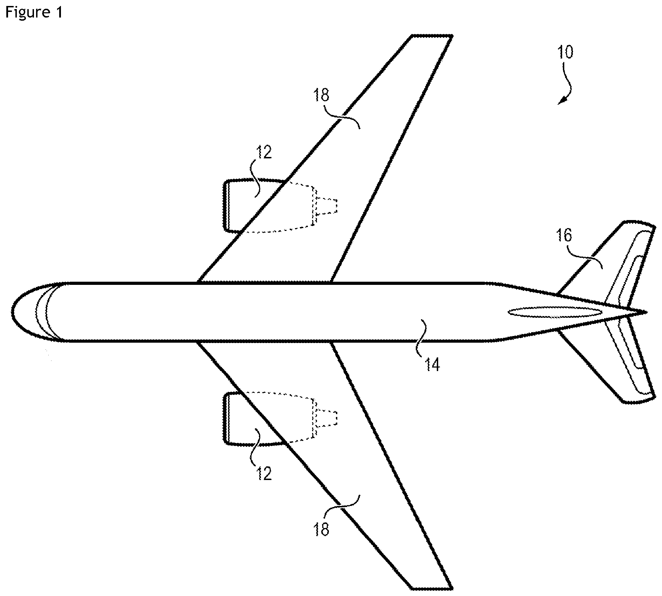

L'aéronef 10 représenté sur la Figure 1 comprend des turbomachines 12 pour le propulser.

Dans l'exemple représenté, l'aéronef 10 est un avion. Celui-ci comprend, de manière classique, un fuselage 14, un empennage 16 et deux ailes 18. Les turbomachines 12 sont ici au nombre de deux et sont chacune logées sous une aile 18 respective. En variante (non représentée), les turbomachines 12 sont disposées le long du fuselage 14, par exemple à proximité de l'empennage 16. En variante encore (également non représentée), l'aéronef 10 comprend une seule turbomachine 12 ou au moins trois turbomachines 12.

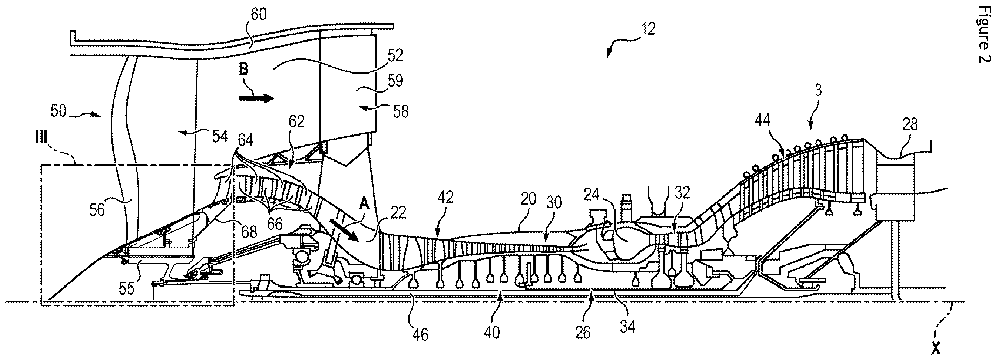

L'une des turbomachines 12 est représentée sur la Figure 2.

Comme visible sur cette Figure, la turbomachine 12 est allongée suivant un axe longitudinal X. Elle présente typiquement une symétrie angulaire autour dudit axe longitudinal X, c'est-à-dire qu'il existe au moins un angle pour lequel la turbomachine est invariante par rotation autour de l'axe longitudinal X.

Ici et dans la suite, les termes « intérieur » et « extérieur », « interne » et « externe », ainsi que leurs déclinaisons, s'entendent en référence à l'axe X, un élément qualifié de « intérieur » ou « interne » étant orienté vers l'axe X alors qu'un élément « extérieur » ou « externe » est orienté à l'opposé de l'axe X. Le termes « radial » et ses déclinaisons s'entendent quant à eux en référence à une direction orthogonale à l'axe X.

La turbomachine 12 comprend, de manière classique, une nacelle 20, une veine interne 22 de circulation d'un flux d'air à travers la nacelle 20, une chambre de combustion 24 logée dans la veine 22, un corps moteur 26 et une tuyère d'échappement des gaz 28.

Dans la suite, les termes « amont » et « aval » s'entendent en référence à un sens d'écoulement d'un flux d'air à travers la veine 22.

Le corps moteur 26 comprend un compresseur 30, une turbine 32 et un arbre de transmission 34 couplant la turbine 32 au compresseur 30 pour l'entraînement du compresseur 30 par la turbine 32. Le compresseur 30 est disposé en amont de la chambre de combustion 24 et alimente la chambre de combustion 24 en air comprimé. La turbine 32 est disposée en aval de la chambre de combustion 24 et reçoit les gaz d'échappement sortant de la chambre de combustion 24.

L'arbre de transmission 34 a pour axe de rotation l'axe longitudinal X.

L'arbre de transmission 34 est guidé en rotation par rapport à la nacelle 20 par le biais de paliers (non représentés).

Dans l'exemple représenté, la turbomachine 12 est une turbomachine à multiples corps, en particulier à double corps, comprenant un corps basse pression 40 en plus du corps moteur 26. Le corps moteur 26 constitue alors un corps haute pression, le compresseur 30 étant un compresseur haute pression, la turbine 32 étant une turbine haute pression et l'arbre de transmission 34 étant un arbre haute pression.

Le corps basse pression 40 comprend un compresseur basse pression 42, une turbine basse pression 44 et un arbre basse pression 46 couplant la turbine basse pression 44 au compresseur basse pression 42 pour l'entraînement du compresseur basse pression 42 par la turbine basse pression 44.

Le compresseur basse pression 42 est disposé en amont du compresseur haute pression 30 et alimente ce dernier en air comprimé. La turbine basse pression 44 est disposée en aval de la turbine haute pression 32 et reçoit les gaz d'échappement sortant de cette dernière.

L'arbre basse pression 46 est guidé en rotation par rapport à la nacelle 20 par le biais de paliers (non représentés).

L'arbre basse pression 46 est coaxial à l'arbre haute pression 34. Il a donc également pour axe de rotation l'axe longitudinal X. En particulier, l'arbre basse pression 46 s'étend à l'intérieur de l'arbre haute pression 34.

La turbomachine 12 comprend également une soufflante 50 pour entraîner le flux d'air dans une veine de circulation externe 52 entourant la nacelle 20. On distingue ainsi un flux d'air primaire A (chaud), constitué par la portion du flux d'air entraînée dans la veine de circulation interne 22, et un flux d'air secondaire B (froid), constitué par la portion du flux d'air entraînée dans la veine de circulation externe 52.

La soufflante 50 comprend un rotor de soufflante 54. Ce rotor de soufflante 54 est monté rotatif relativement à la nacelle 20 autour de l'axe longitudinal X. Il comprend un disque 55 pourvu d'aubes de soufflante 56 s'étendant sensiblement radialement vers l'extérieur depuis le disque 55. Ces aubes 56, lorsqu'elles sont mises en rotation, entraînent le flux d'air dans la veine de circulation externe 52.

Le rotor de soufflante 54 est entraîné en rotation par la turbine basse pression 44, par l'intermédiaire de l'arbre basse pression 46. Dans l'exemple représenté, cet entraînement est direct, c'est-à-dire que le rotor de soufflante 54 est solidaire en rotation de l'arbre basse pression 46. En variante (non représentée), cet entraînement se fait par l'intermédiaire d'un réducteur permettant au rotor de soufflante 54 de tourner à une vitesse inférieure à celle de l'arbre basse pression 46.

Le rotor de soufflante 54 est en particulier disposé en amont de la veine de circulation interne 22 et entraîne également le flux d'air dans cette dernière.

Dans l'exemple représenté, la soufflante 50 comprend également un stator de soufflante 58, également appelé redresseur, comprenant des aubes fixes 59 agencées à la périphérie de la nacelle 20, dans la veine de circulation externe 52, suivant un plan orthogonal à l'axe longitudinal X. Ce stator de soufflante 58 est ici agencé en aval du rotor de soufflante 54.

La veine de circulation externe 52 est ici définie entre la nacelle 20 et un carter de soufflante 60 entourant la soufflante 50. La turbomachine 12 est typiquement constituée par un turboréacteur à fort taux de dilution (en anglais « bypass ratio »), le taux de dilution étant défini comme le rapport du débit du flux secondaire B (froid) sur le débit du flux primaire A (chaud).

Dans l'exemple représenté, la turbomachine 12 comprend encore un précompresseur 62 en entrée de la veine interne 22. Ce précompresseur 62 comprend une alternance d'aubes fixes 64 et de pales mobiles 66 s'étendant successivement dans la veine interne 22. Les aubes fixes 64 sont solidaires de la nacelle 20. Les pales mobiles 66 sont montées sur un arbre de précompresseur 68. Cet arbre de précompresseur 68 est fixé au disque 55 du rotor de soufflante 54.

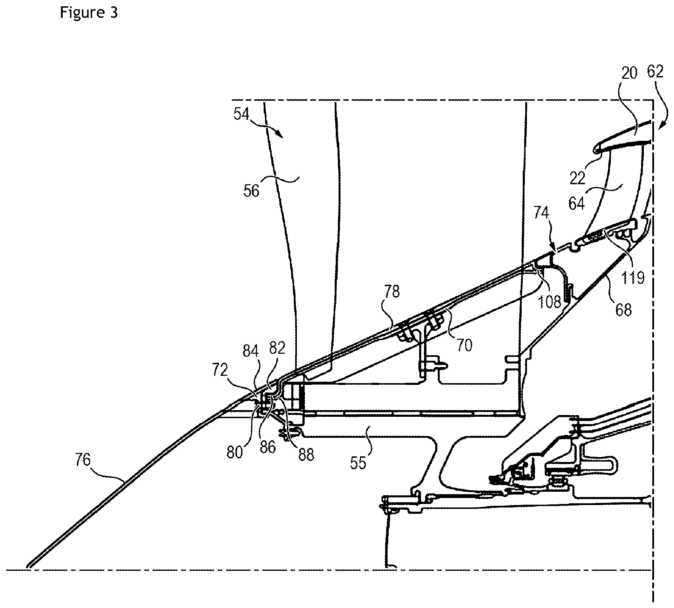

En référence à la Figure 3, le rotor de soufflante 54 comprend également des plateformes inter-aubes 70 interposées circonférentiellement entre les aubes 56 et des brides 72, 74 retenant lesdites plateformes 70 au disque 55. Dans l'exemple représenté, le rotor de soufflante 54 comprend encore une toupie conique 76 montée en amont du disque 55 et des plateformes inter-aubes 70.

Chaque plateforme inter-aubes 70 présente une surface extérieure 78 qui délimite intérieurement une partie de la veine externe 52 entre les aubes 56.

Les brides 72, 74 sont chacune de forme annulaire et centrées sur l'axe longitudinal X. Comme pour les plateformes inter-aubes 70, elles définissent chacune une partie de la veine externe 52 au niveau de la soufflante 50. Elles comprennent une bride amont 72, située en amont des plateformes inter-aubes 70, et une bride aval 74 située en aval des plateformes inter-aubes 70.

La bride amont 72 est ici interposée entre la toupie 76 et les plateformes inter-aubes 70. Elle comprend une virole radiale 80 fixée au disque 55 et une patte 82 faisant saillie axialement vers l'aval depuis ladite virole 80. Cette patte 82 présente une surface externe 84 délimitant intérieurement une partie de la veine externe 52 au niveau de la soufflante 50 et une surface interne 86 en appui contre une extrémité amont 88 des plateformes inter-aubes 70.

La bride aval 74 est constituée par un anneau d'écartement rotatif 90. Elle a typiquement un diamètre extérieur compris entre 600 et 1200 mm.

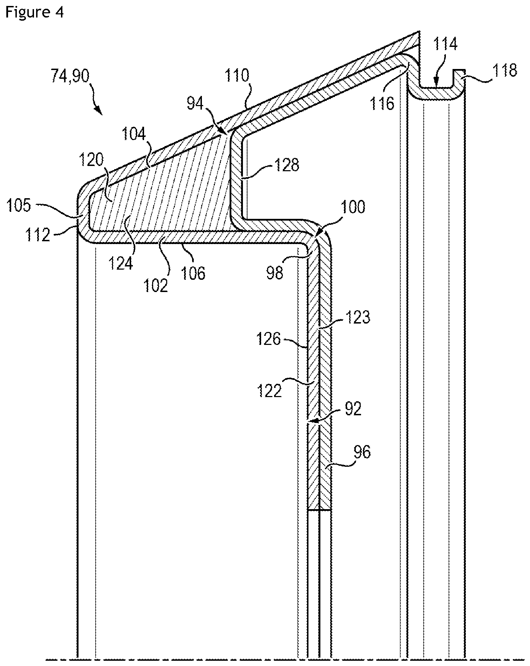

En référence à la Figure 4, l'anneau d'écartement rotatif 90 comprend une virole radiale 92 fixée à l'arbre de précompresseur 68 et une bague 94 prolongeant radialement la virole 92 vers l'extérieur.

La virole 92 est sensiblement plate. Elle s'étend sensiblement suivant un plan radial. Elle présente une extrémité interne 96 de fixation à l'arbre de précompresseur 68 et une extrémité externe 98 de liaison à la bague 94.

La bague 94 s'étend autour de la virole 92 et fait saillie axialement vers l'amont relativement à ladite virole 92. Elle est reliée à la virole 92 par un congé 100 dont la concavité est orientée vers l'amont. Le congé 100 a typiquement un rayon de courbure compris entre 10 et 60 mm.

La bague 94 est définie par révolution autour de l'axe X d'une génératrice globalement en forme de V pointant vers l'amont. Elle comprend une jambe intérieure 102 et une jambe extérieure 104 convergeant l'une vers l'autre en direction de l'amont jusqu'à une extrémité amont 105 de la bague 94.

La jambe intérieure 102 définit un épaulement axial 106 orienté vers l'intérieur. Cet épaulement 106 est sensiblement cylindrique, c'est-à-dire qu'il a une extension radiale nulle ou du moins très faible en comparaison avec ses autres dimensions. Il est en particulier sensiblement cylindrique de révolution. L'épaulement 106 est en appui contre une extrémité aval 108 (Figure 2) des plateformes inter-aubes 70.

En particulier, la jambe intérieure 102 prolonge le congé 100 vers l'amont.

La jambe extérieure 104 définit une surface externe 110 globalement tronconique s'évasant vers l'aval et délimitant intérieurement une partie de la veine externe 52. La jambe extérieure 104 a une extension axiale supérieure à celle de la jambe intérieure 102. Sachant que les deux jambes 102, 104 ont une même limite amont (elles se terminent toutes deux au niveau de l'extrémité amont 105 de la bague 94), cela implique que la jambe extérieure 104 fait saillie vers l'aval relativement à la jambe intérieure 102. En particulier, la jambe extérieure 104 fait également saillie vers l'aval relativement à la virole 92.

L'extrémité amont 105 définit ici un épaulement radial 112, sensiblement plan et compris dans un plan radial, orienté vers l'amont.

La bague 94 comprend également un appendice 114 formant crochet prolongeant la jambe extérieure 104 vers l'aval. L'appendice 114 est incurvé vers l'extérieur. Il présente une extrémité amont 116 de liaison à la jambe extérieure 104 et une extrémité aval 118 libre. La distance de l'extrémité aval 118 à l'axe X est inférieure ou égale à la distance de l'extrémité amont 116 à l'axe X ; dans l'exemple représenté, les deux distances sont sensiblement égales l'une à l'autre. L'appendice 114 permet d'assurer l'étanchéité entre le rotor de soufflante 54 et le carter 119 (Figure 2) de la nacelle 20.

La bague 94 comprend encore un noyau de renforcement 120 interposé entre les jambes 102, 104. Ledit noyau 120 est logé au fond de l'espace 122 entre les jambes 102, 104, c'est-à-dire qu'il vient contre l'extrémité amont 105 de la bague 94.

L'anneau d'écartement rotatif 90 est en particulier formé d'une peau amont 122, une peau aval 123 et un insert annulaire 124.

La peau amont 122 constitue une partie amont de la virole 92 et une partie amont du congé 100, ainsi que la jambe intérieure 102, l'extrémité amont 105 et une partie extérieure de la jambe extérieure 104 de la bague 94. La peau amont 122 délimite ainsi une face amont 126 de l'anneau d'écartement rotatif 90.

La peau aval 123 constitue une partie aval de la virole 92 et une partie aval du congé 100, ainsi que l'appendice 114 et une partie intérieure de la jambe extérieure 104 de la bague 94. Elle s'étend en outre entre les jambes intérieure et extérieure 102, 104 en aval du noyau 120. La peau aval 123 délimite ainsi une face aval 128 de l'anneau d'écartement rotatif 90.

L'insert 124 est logé entre les peaux 122, 123. Il constitue le noyau 120.

Les peaux 122, 123 et l'insert 124 sont chacun formé d'un matériau composite comprenant des fibres noyées dans une matrice. Les fibres de l'insert 124 sont de préférence orientées de manière prédominante dans la direction circonférentielle (c'est-à-dire orthogonale aux directions axiale et radiale) de manière à supporter les charges circonférentielles et radiales pendant la rotation du rotor de soufflante 54.

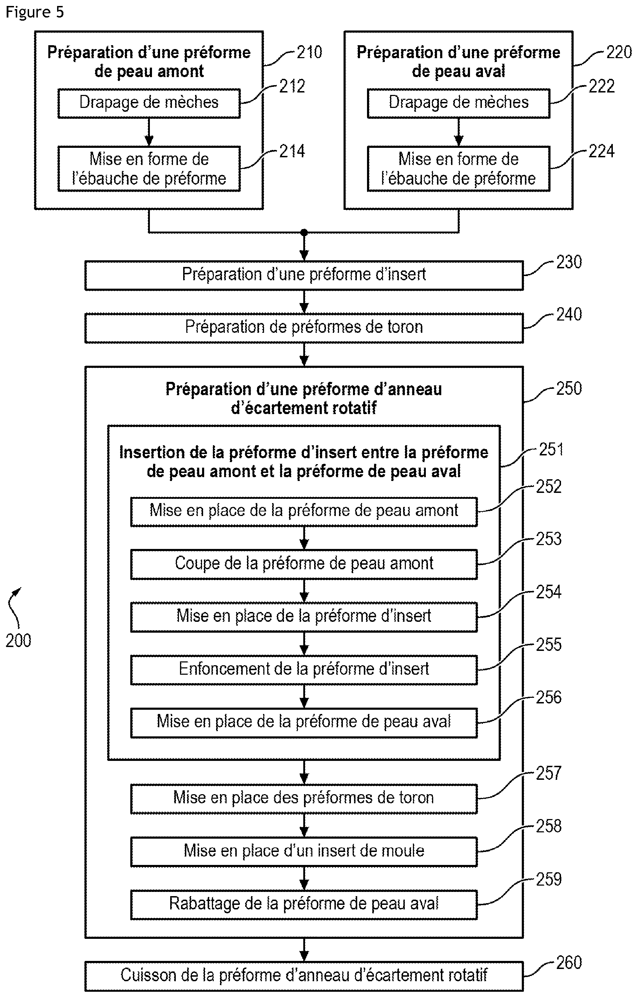

Un procédé 200 de fabrication de l'anneau d'écartement rotatif 90 va maintenant être décrit, en référence aux Figures 5 à 25.

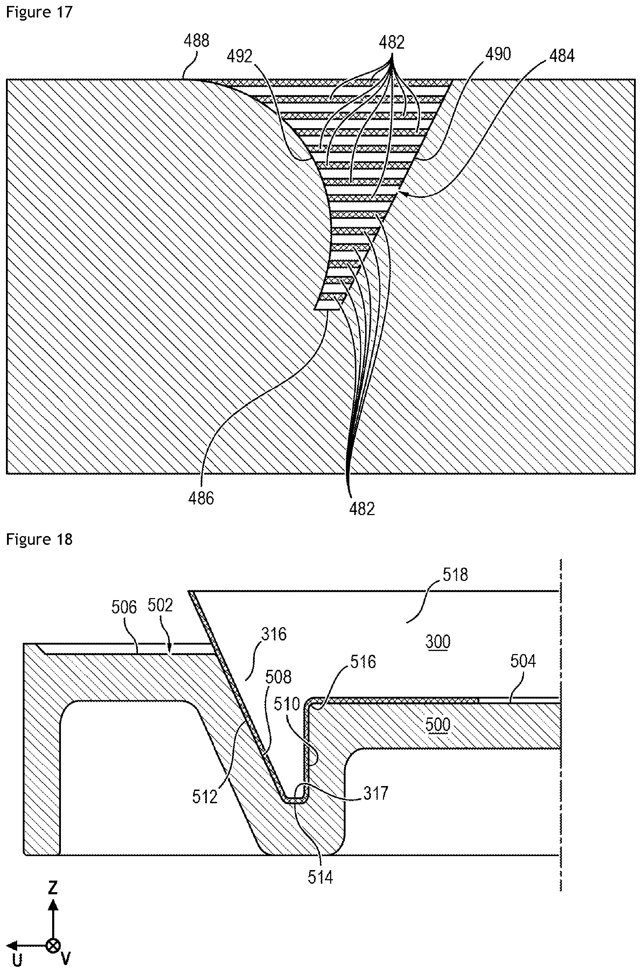

Comme visible sur la Figure 5, le procédé 200 comprend une première étape 210 de préparation d'une préforme de peau amont 300 (Figure 18). Cette étape 210 débute par un drapage 212 de mèches de préimprégné par placement automatique de fibre.

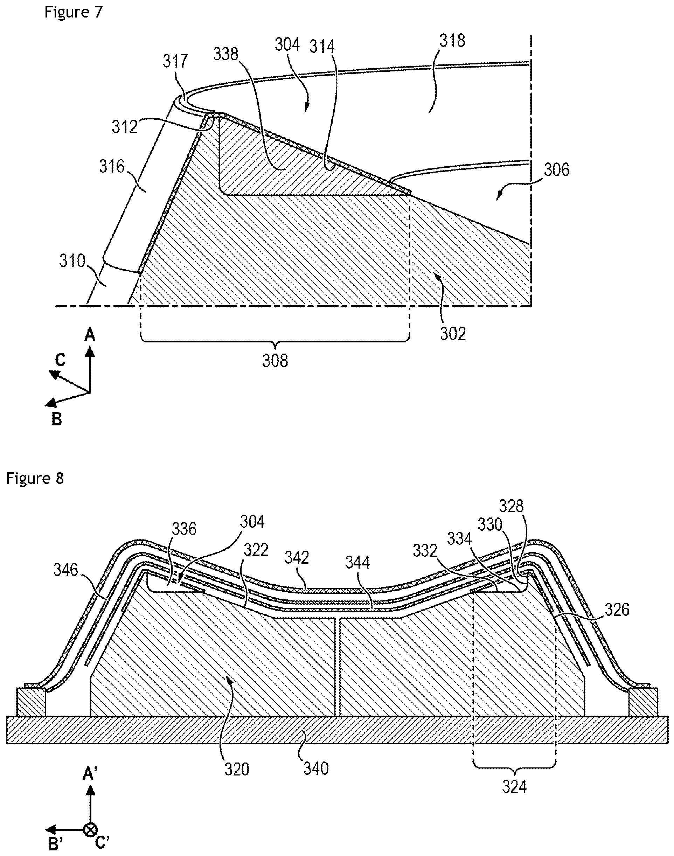

Comme visible sur la Figure 7, lesdites mèches de préimprégné sont drapées sur un premier moule de peau amont 302 de manière à produire une ébauche de préforme de peau amont 304 annulaire.

Le premier moule de peau amont 302 a une forme de révolution centrée sur un axe de révolution (non représenté). Pour la suite de description, les termes d'orientation s'entendent en référence à un repère cylindrique attaché au premier moule de peau amont 302, représenté sur la Figure 7, dans lequel on distingue en chaque point :
- une direction axiale A parallèle à l'axe de révolution, allant de l'arrière vers l'avant
- une direction radiale B, orthogonale à la direction axiale A, reliant l'axe de révolution audit point et allant de l'intérieur vers l'extérieur, et
- une direction circonférentielle C orthogonale aux directions axiale A et radiale B.

Le premier moule de peau amont 302 présente une face avant 306 avec un bord annulaire extérieur 308 convexe. Ledit bord annulaire extérieur 308 comprend une partie extérieure 310 tronconique s'évasant vers l'arrière, une partie intermédiaire 312 annulaire, sensiblement plane, s'étendant sensiblement suivant un plan radial et faisant saillie vers l'intérieur depuis une extrémité avant de la partie extérieure 310, et une partie intérieure 314 s'étendant vers l'intérieur depuis la partie intermédiaire 312, ladite partie intérieure 314 étant en forme de tronc de cône s'évasant vers l'avant.

Les mèches de préimprégné sont drapées sur ledit bord annulaire extérieur 308. Ainsi, elles sont drapées sur une surface convexe, ce qui est très adapté au placement automatique de fibres, la tête de pose d'une machine de drapage ne pouvant pas plaquer les mèches de préimprégné contre un support présentant une forme concave lorsque ladite forme concave a un rayon de courbure inférieur à celui du rouleau de la tête de pose.

Chaque mèche de préimprégné est en particulier drapée suivant une direction (non représentée) formant en chaque point un angle non nul avec la direction circonférentielle C locale, ledit angle étant de préférence compris entre 25° et 90°. En d'autres termes, la direction de drapage de chaque mèche de préimprégné a en tout point une composante radiale.

De préférence, différentes couches de mèches de préimprégné sont drapées successivement de manière à ce que l'ébauche de préforme de peau amont 304 soit formée d'un empilement de plusieurs plis empilés suivant la direction axiale A. Avantageusement, l'orientation de la direction de drapage des mèches alterne d'une couche à l'autre. Par exemple, la direction de drapage des mèches dans les couches paires (respectivement impaires) est orientée sensiblement à 90° de la direction circonférentielle C, la direction de drapage des mèches dans les couches impaires (respectivement paires) étant orientée sensiblement à 30° de la direction circonférentielle C.

L'ébauche de préforme de peau amont 304 comprend ainsi :
- une partie extérieure 316 tronconique, s'évasant vers l'arrière, correspondant à la partie extérieure de la jambe extérieure 104 de la bague 94, et
- une partie intermédiaire 317 annulaire, sensiblement plane et faisant saillie vers l'intérieur depuis une extrémité avant de la partie extérieure 316, ladite partie intermédiaire 317 correspondant à l'extrémité amont 105 de la bague 94.

En revanche, l'ébauche de préforme de peau amont 304 ne comprend pas de partie correspondant à la jambe intérieure 102 de la bague 94, à la partie amont du congé 100 ou à la partie amont de la virole 92. A la place, elle comprend une partie intérieure 318 s'étendant vers l'intérieur depuis la partie intermédiaire 317, ladite partie intérieure 318 étant en forme de tronc de cône s'évasant vers l'avant.

Le drapage 212 est ainsi suivi d'une étape 214 de mise en forme de l'ébauche de préforme de peau amont 304 pour former les parties correspondant à la jambe intérieure 102 de la bague 94, à la partie amont du congé 100 et à la partie amont de la virole 92 et ainsi obtenir la préforme de peau amont 300.

Cette mise en forme est par exemple réalisée par thermoformage sous vide. A cet effet, l'ébauche de préforme de peau amont 304 est, comme visible sur la Figure 8, placée sur un deuxième moule de peau amont 320. Ce deuxième moule de peau amont 320 a une forme de révolution centrée sur un axe de révolution (non représenté). Pour la suite de description, les termes d'orientation s'entendent en référence à un repère cylindrique attaché au deuxième moule de peau amont 320, représenté sur la Figure 8, dans lequel on distingue en chaque point :
- une direction axiale A' parallèle à l'axe de révolution, allant de l'arrière vers l'avant
- une direction radiale B', orthogonale à la direction axiale A', reliant l'axe de révolution audit point et allant de l'intérieur vers l'extérieur, et
- une direction circonférentielle C' orthogonale aux directions axiale A' et radiale B'.

De manière similaire au premier moule de peau amont 302, le deuxième moule de peau amont 320 présente une face avant 322 avec un bord annulaire extérieur 324 convexe, ledit bord annulaire extérieur 324 comprenant une partie extérieure 326 tronconique s'évasant vers l'arrière et une partie intermédiaire 328 annulaire, sensiblement plane, s'étendant sensiblement suivant un plan radial et faisant saillie vers l'intérieur depuis une extrémité avant de la partie extérieure 326. La partie extérieure 326 et la partie intermédiaire 328 sont en particulier sensiblement identiques et avantageusement parfaitement identiques respectivement à la partie extérieure 310 et à la partie intermédiaire 312 du premier moule de peau amont 302.

A la différence du premier moule de peau amont 302, le bord annulaire extérieur 324 du deuxième moule de peau amont 320 ne comprend pas de partie intérieure en forme de tronc de cône s'évasant vers l'avant. A la place, ledit bord annulaire extérieur 324 comprend :
- une partie cylindrique 330 s'étendant vers l'arrière depuis une extrémité intérieure de la partie intermédiaire 328,
- une partie intérieure 332 annulaire, sensiblement plane, s'étendant sensiblement suivant un plan radial et délimitant une extrémité intérieure du bord annulaire extérieur 324, et
- un congé annulaire 334 reliant la partie cylindrique 330 à la partie intérieure 332.

La partie cylindrique 330, la partie intérieure 332 et le congé annulaire 334 délimitent ensemble un évidement 336 concave dans la face avant 322, c'est-à-dire que la surface résultant de la combinaison de ces trois régions 330, 332, 334 est en creux relativement à la surface reliant l'extrémité intérieure de la partie intermédiaire 328 à l'extrémité intérieure du bord annulaire extérieur 324.

Le bord annulaire extérieur 324 a ainsi la forme de la peau amont 122.

Avantageusement, le deuxième moule de peau amont 320 est obtenu à partir du premier moule de peau amont 302 par retrait d'un insert 338 (Figure 7) comblant l'évidement 336 et définissant la partie intérieure 314 du bord annulaire extérieur 308 de la face avant 306 du premier moule de peau amont 302.

Le deuxième moule de peau amont 320 est placé sur une plateforme de formage 340, puis l'ébauche de préforme de peau amont 304 est recouverte d'une vessie 342 avec de préférence un séparateur 344 et un drain 346 interposés entre l'ébauche de préforme de peau amont 304 et la vessie 342. L'étanchéité est réalisée entre la vessie 342 et la plateforme de formage 340, puis l'ensemble est chauffé, typiquement à une température comprise entre 80 et 90°C, pendant que le vide est fait entre la vessie 342 et la plateforme de formage 340. La vessie 342 vient ainsi se plaquer contre le deuxième moule de peau amont 320 et entraîne avec elle l'ébauche de préforme de peau amont 304, ramollie par la chaleur, laquelle prend ainsi la forme du bord annulaire extérieur 324 de la face amont 322 dudit moule 320.

On obtient ainsi la préforme de peau amont 300.

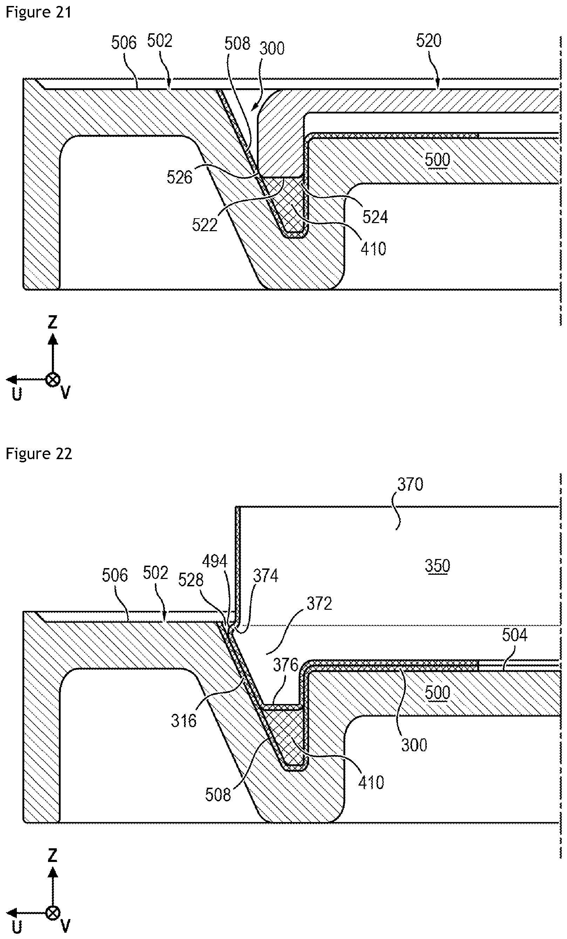

De retour à la Figure 5, le procédé de fabrication 200 comprend également une deuxième étape 220 de préparation d'une préforme de peau aval 350 (Figure 22). Cette deuxième étape 220 est ici mise en œuvre parallèlement à la première étape 210. En variante, elle est mise en œuvre à la suite de la première étape 210, ou bien encore avant ladite première étape 210.

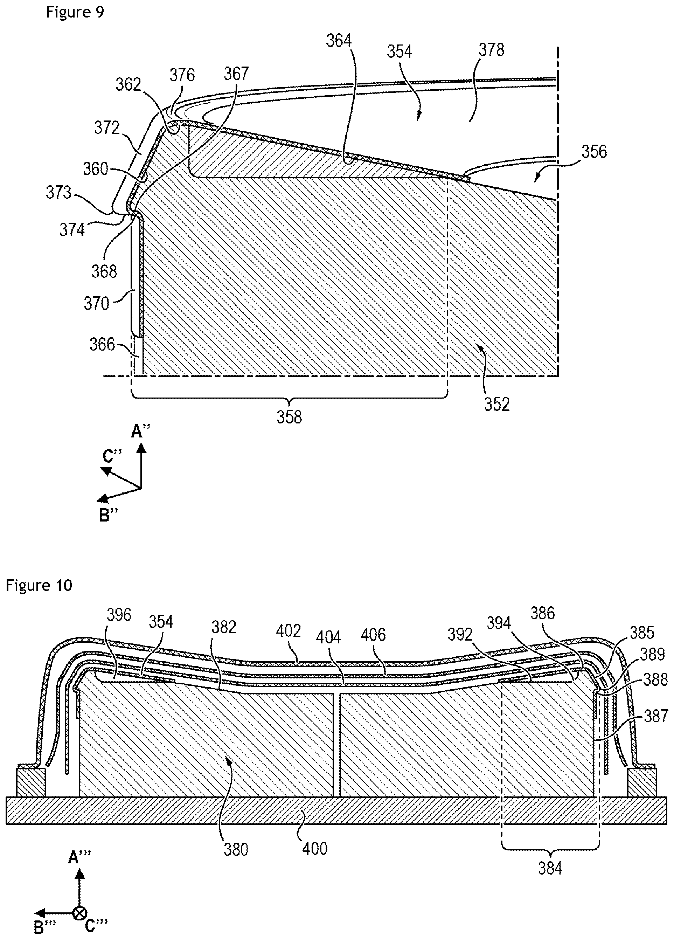

De manière similaire à la première étape 210, la deuxième étape 220 débute par un drapage 222 de mèches de préimprégné par placement automatique de fibre. Comme visible sur la Figure 9, lesdites mèches de préimprégné sont drapées sur un premier moule de peau aval 352 de manière à produire une ébauche de préforme de peau aval 354 annulaire.

Le premier moule de peau aval 352 a une forme de révolution centrée sur un axe de révolution (non représenté). Pour la suite de description, les termes d'orientation s'entendent en référence à un repère cylindrique attaché au premier moule de peau aval 352, représenté sur la Figure 9, dans lequel on distingue en chaque point :
- une direction axiale A" parallèle à l'axe de révolution, allant de l'arrière vers l'avant
- une direction radiale B", orthogonale à la direction axiale A'', reliant l'axe de révolution audit point et allant de l'intérieur vers l'extérieur, et
- une direction circonférentielle C" orthogonale aux directions axiale A" et radiale B".

Le premier moule de peau aval 352 présente une face avant 356 avec un bord annulaire extérieur 358 convexe. Ledit bord annulaire extérieur 358 comprend une partie extérieure 360 tronconique s'évasant vers l'arrière, une partie intermédiaire 362 annulaire, sensiblement plane, s'étendant sensiblement suivant un plan radial et faisant saillie vers l'intérieur depuis une extrémité avant de la partie extérieure 360, et une partie intérieure 364 s'étendant vers l'intérieur depuis la partie intermédiaire 362, ladite partie intérieure 364 étant en forme de tronc de cône s'évasant vers l'avant.

Le premier moule de peau aval 352 présente également une face cylindrique extérieure 366. Cette face cylindrique extérieure 366 a un diamètre inférieur au diamètre extérieur de la face avant 356. Une collerette 367 délimitant un épaulement 368 orienté vers l'arrière assure la jonction entre la face cylindrique extérieure 366 et la face avant 356.

Les mèches de préimprégné sont drapées sur ledit bord annulaire extérieur 358 et sur un tronçon d'extrémité avant 370 de la face cylindrique extérieure 366. Ainsi, elles sont pour l'essentiel drapées sur une surface convexe, ce qui comme on l'a vu est très adapté au placement automatique de fibres. Si lesdites mèches sont également drapées sur une surface concave, à l'interface entre les faces avant 356 et cylindrique extérieure 366, cela ne pose pas de difficulté au vu de la petitesse de la surface concernée : il n'est en effet pas gênant, sur une si petite surface, que les mèches ne soient pas plaquées au moule 352.

Chaque mèche de préimprégné est en particulier drapée suivant une direction (non représentée) formant en chaque point un angle non nul avec la direction circonférentielle C" locale, ledit angle étant de préférence compris entre 25° et 90°. En d'autres termes, la direction de drapage de chaque mèche de préimprégné a en tout point une composante radiale.

De préférence, différentes couches de mèches de préimprégné sont drapées successivement suivant la direction axiale A" de manière à ce que l'ébauche de préforme de peau aval 354 soit formée d'un empilement axial de plusieurs plis. Avantageusement, l'orientation de la direction de drapage des mèches alterne d'une couche à l'autre. Par exemple, la direction de drapage des mèches dans les couches paires (respectivement impaires) est orientée sensiblement à 90° de la direction circonférentielle C", la direction de drapage des mèches dans les couches impaires (respectivement paires) étant orientée sensiblement à 30° de la direction circonférentielle C".

L'ébauche de préforme de peau aval 354 comprend ainsi :
- une partie arrière 370 cylindrique s'étendant axialement,
- une partie extérieure 372 tronconique, s'évasant vers l'arrière jusqu'à une extrémité arrière 373 présentant un diamètre supérieur à celui de la partie arrière 370, ladite partie extérieure 372 correspondant à la partie intérieure de la jambe extérieure 104 de la bague 94,
- une collerette 374 sensiblement plane et s'étendant sensiblement suivant un plan radial, ladite collerette 374 reliant une extrémité avant de la partie arrière 370 à l'extrémité arrière 373 de la partie extérieure 372, ladite collerette 374 correspondant à l'extrémité amont 116 de l'appendice 114 de la bague 94, et
- une partie intermédiaire 376 annulaire, sensiblement plane et faisant saillie vers l'intérieur depuis une extrémité avant de la partie extérieure 372, ladite partie intermédiaire 374 correspondant à la portion de la peau aval 123 qui s'étend entre les jambes intérieure et extérieure 102, 104 de la bague 94 en aval du noyau 120.

En revanche, l'ébauche de préforme de peau aval 354 ne comprend pas de partie correspondant à la partie aval du congé 100 ou à la partie aval de la virole 92. A la place, elle comprend une partie intérieure 378 s'étendant vers l'intérieur depuis la partie intermédiaire 376, ladite partie intérieure 378 étant en forme de tronc de cône s'évasant vers l'avant. L'angle au sommet de cette partie intérieure 378 est en particulier supérieur à celui de la partie intérieure 318 de l'ébauche de préforme de peau amont 304.

Le drapage 222 est ainsi suivi d'une étape 224 de mise en forme de l'ébauche de préforme de peau aval 354 pour former les parties correspondant à la partie aval du congé 100 et à la partie aval de la virole 92 et ainsi obtenir la préforme de peau aval 350.

Cette mise en forme est par exemple réalisée par thermoformage sous vide. A cet effet, l'ébauche de préforme de peau aval 354 est, comme visible sur la Figure 10, placée sur un deuxième moule de peau aval 380. Ce deuxième moule de peau aval 380 a une forme de révolution centrée sur un axe de révolution (non représenté). Pour la suite de description, les termes d'orientation s'entendent en référence à un repère cylindrique attaché au deuxième moule de peau aval 380, représenté sur la Figure 10, dans lequel on distingue en chaque point :
- une direction axiale A‴ parallèle à l'axe de révolution, allant de l'arrière vers l'avant
- une direction radiale B‴, orthogonale à la direction axiale A"', reliant l'axe de révolution audit point et allant de l'intérieur vers l'extérieur, et
- une direction circonférentielle C‴ orthogonale aux directions axiale A'" et radiale B"'.

De manière similaire au premier moule de peau aval 352, le deuxième moule de peau aval 380 présente une face avant 382 avec un bord annulaire extérieur 384 convexe, ledit bord annulaire extérieur 384 comprenant une partie extérieure 385 tronconique s'évasant vers l'arrière et une partie intermédiaire 386 annulaire, sensiblement plane, s'étendant sensiblement suivant un plan radial et faisant saillie vers l'intérieur depuis une extrémité avant de la partie extérieure 385. Le deuxième moule de peau aval 380 présente également une face cylindrique extérieure 387 de diamètre inférieur au diamètre extérieur de la face avant 382 et une collerette 388 qui délimite un épaulement 389 orienté vers l'arrière et assure la jonction entre la face cylindrique extérieure 387 et la face avant 382.

La partie extérieure 385, la partie intermédiaire 386, la face cylindrique extérieure 387 et la collerette 388 sont en particulier sensiblement identiques et avantageusement parfaitement identiques respectivement à la partie extérieure 360, à la partie intermédiaire 362, à la face cylindrique externe 366 et à la collerette 367 du premier moule de peau aval 352.

A la différence du premier moule de peau aval 352, le bord annulaire extérieur 384 du deuxième moule de peau aval 380 ne comprend pas de partie intérieure en forme de tronc de cône s'évasant vers l'avant. A la place, ledit bord annulaire extérieur 384 comprend :
- une partie intérieure 392 annulaire, sensiblement plane, s'étendant sensiblement suivant un plan radial en retrait de la partie intermédiaire 386 et délimitant une extrémité intérieure du bord annulaire extérieur 384, et
- un congé annulaire 394 reliant la partie intérieure 392 à une extrémité intérieure de la partie intermédiaire 386.

La partie intérieure 392 et le congé annulaire 394 délimitent ensemble un évidement 396 concave dans la face avant 382, c'est-à-dire que la surface résultant de la combinaison de ces deux régions 392, 394 est en creux relativement à la surface reliant l'extrémité intérieure de la partie intermédiaire 386 à l'extrémité intérieure du bord annulaire extérieur 384.

Le bord annulaire extérieur 384 a ainsi la forme de la peau aval 123.

Avantageusement, le deuxième moule de peau aval 380 est obtenu à partir du premier moule de peau aval 352 par retrait d'un insert 398 (Figure 9) comblant l'évidement 396 et définissant la partie intérieure 364 du bord annulaire extérieur 358 de la face avant 356 du premier moule de peau aval 352.

Le deuxième moule de peau amont 380 est placé sur une plateforme de formage 400, puis l'ébauche de préforme de peau aval 354 est recouverte d'une vessie 402 avec de préférence un séparateur 404 et un drain 406 interposés entre l'ébauche de préforme de peau aval 354 et la vessie 402. L'étanchéité est réalisée entre la vessie 402 et la plateforme de formage 400, puis l'ensemble est chauffé, typiquement à une température comprise entre 80 et 90° C, pendant que le vide est fait entre la vessie 402 et la plateforme de formage 400. La vessie 402 vient ainsi se plaquer contre le deuxième moule de peau aval 380 et entraîne avec elle l'ébauche de préforme de peau amont 354, ramollie par la chaleur, laquelle prend ainsi la forme du bord annulaire extérieur 384 de la face amont 382 dudit moule 380.

On obtient ainsi la préforme de peau aval 350.

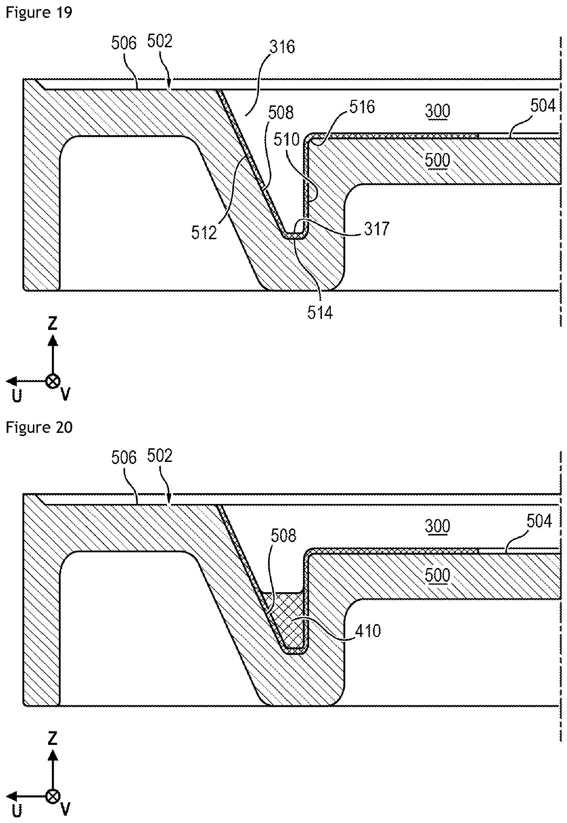

De retour à la Figure 5, le procédé de fabrication 200 comprend encore une troisième étape 230 de préparation d'une préforme d'insert 410 (Figure 20). Cette troisième étape 230 est ici mise en œuvre après les première et deuxième étapes 210, 220. En variante (non représentée), elle est mise en œuvre parallèlement auxdites étapes 210, 220, ou entre lesdites étapes 210, 220, ou bien encore avant lesdites étapes 210, 220.

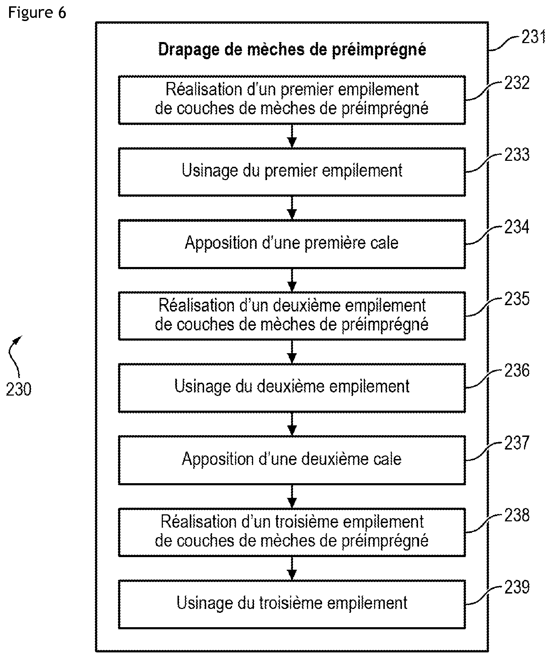

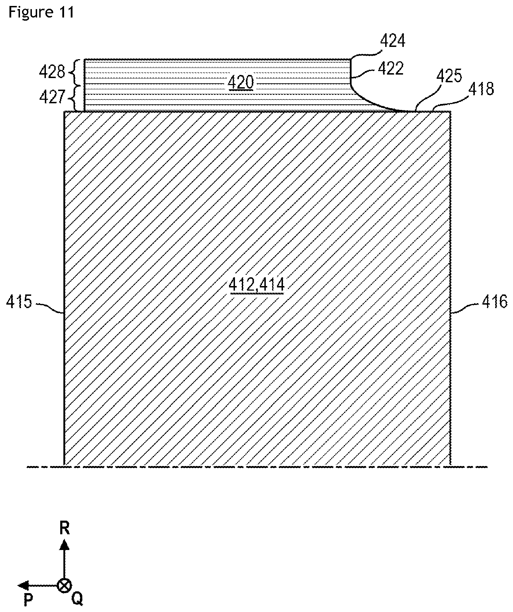

En référence à la Figure 6, cette troisième étape 230 comprend le drapage 231 de mèches de préimprégné sur un moule d'insert 412 (Figure 11) par placement automatique de fibres. Comme visible sur la Figure 11, le moule d'insert 412 a une forme de disque 414 comprenant deux grandes faces discoïdales 415, 416 opposées reliées l'une à l'autre par une tranche 418 circonférentielle. Ce disque 414 est en particulier de révolution autour d'un axe central (non représenté). Pour la suite de description, les termes d'orientation s'entendent en référence à un repère cylindrique attaché au moule d'insert 412, représenté sur la Figure 11, dans lequel on distingue en chaque point :
- une direction axiale P parallèle à l'axe central, allant de l'arrière vers l'avant,
- une direction radiale R, orthogonale à la direction axiale P, reliant l'axe central audit point et allant de l'intérieur vers l'extérieur, et
- une direction circonférentielle Q orthogonale aux directions axiale P et radiale R.

Lors dudit drapage 231, les mèches de préimprégné sont drapées sur la tranche 418 du disque 414 sensiblement parallèlement à la direction circonférentielle Q, c'est-à-dire suivant une direction formant un angle inférieur à 5°, voire inférieur à 1° avec ladite direction circonférentielle Q. Ainsi, les fibres de l'insert 124 sont orientées de manière prédominante dans la direction circonférentielle, ce qui permet à l'insert 124 de supporter d'importantes charges circonférentielles et radiales pendant la rotation du rotor de soufflante 54.

De retour à la Figure 6, le drapage 231 débute par une première sous-étape 232 de réalisation d'un premier empilement 420 (Figure 11) de couches de mèches de préimprégné.

Lors de cette première sous-étape 232, les mèches de préimprégné sont drapées par couches successives suivant la direction radiale R. Une première couche (non référencée) est d'abord drapée à même la tranche 418 du moule 412, puis chaque couche suivante est drapée sur la face extérieure de la couche précédente. Par exemple entre 40 et 60 couches sont drapées successivement pour former ce premier empilement 420.

La position axiale de chaque couche est définie par référence à un premier bord axial 422, ici un bord arrière, du premier empilement 420. En d'autres termes, les couches sont positionnées axialement les unes relativement aux autres de sorte que le premier bord axial 422 du premier empilement 420 présente un profil radial, c'est-à-dire pris dans un plan radial, prédéfini. En particulier, les couches sont positionnées de sorte que ledit premier bord axial 422 présente une extension axiale avec avantageusement, comme représenté, une extrémité extérieure 424 du premier bord axial 422 axialement en retrait par rapport à l'extrémité intérieure 425 du premier bord axial 422. En d'autres termes, l'extrémité extérieure 424 du premier bord axial 422 est décalée axialement vers l'avant par rapport à l'extrémité intérieure 425.

Plus particulièrement, les couches sont positionnées de sorte que le premier empilement 420 comprenne une section intérieure 427 dans laquelle le premier bord axial 422 présente une extension axiale et une section extérieure 428 dans laquelle le premier bord axial 422 s'étend sensiblement suivant un plan radial, c'est-à-dire que l'extension axiale du premier bord axial 422 dans cette section extérieure 428 est sensiblement nulle. La section intérieure 427 délimite une extrémité intérieure (non référencée) du premier empilement 420 et la section extérieure 428 délimite une extrémité extérieure (non référencée) du premier empilement 420. Le profil radial du premier bord axial 422 est sensiblement continu et dérivable à la jonction entre lesdites sections intérieure et extérieure 427, 428. Dans la section intérieure 427, le profil radial du premier bord axial 422 est concave avec une concavité orientée radialement vers l'extérieur.

Les sections intérieure 427 et extérieure 428 ont sensiblement la même épaisseur radiale.

Avantageusement, les mèches de préimprégné sont disposées en quinconce dans la section extérieure 428. A cet effet, la section extérieure 428 présente une alternance de couches décalées axialement les unes relativement aux autres, lesdites couches étant décalées alternativement vers l'avant et vers l'arrière. En d'autres termes, la section extérieure 428 inclut une pluralité de premières couches alignées radialement les unes avec les autres, avec interposées entre elles des deuxièmes couches décalées axialement vers l'avant ou vers l'arrière relativement aux premières couches, lesdites deuxièmes couches étant elles-mêmes alignées radialement les unes avec les autres. Ce décalage axial est typiquement compris entre 1 et 2 mm et est par exemple sensiblement égal à 1,5 mm. Ainsi, on évite un alignement des espaces entre les mèches, ce qui risquerait de créer des fragilités au sein de l'insert 410.

De préférence, les couches alignées radialement les unes avec les autres sont regroupées par groupe d'au moins deux couches, par exemple trois, empilées successivement sans couche décalée radialement interposée entre elles.

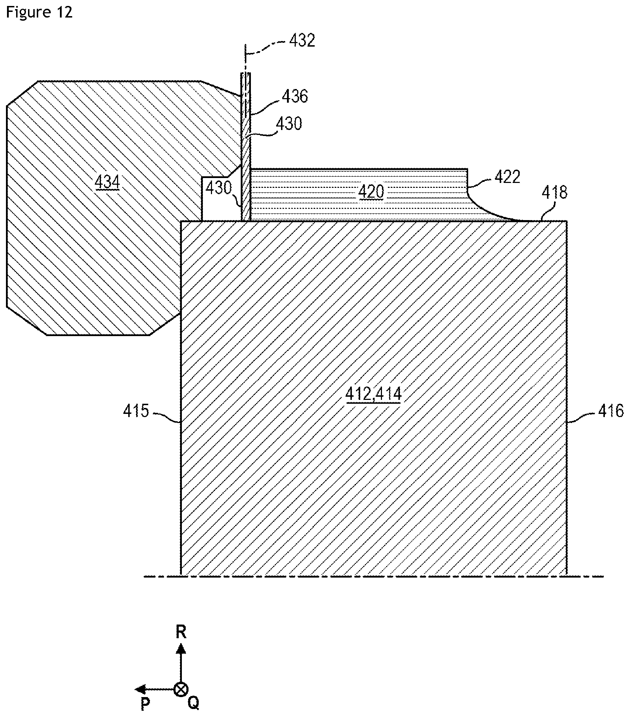

De retour à la Figure 6, la sous-étape 232 est suivie d'une sous-étape 233 d'usinage du premier empilement 420. Comme visible sur la Figure 12, lors de cette sous-étape 233, le bord axial du premier empilement 420 qui est opposé au bord axial défini par drapage 422, ici donc le bord avant, est usiné, formant ainsi un premier bord axial usiné 430. Cet usinage est en particulier réalisé par découpe franche du premier empilement 420 selon une première surface de découpe 432 radiale au moyen d'un outillage de découpe 434 présentant une lame 436 s'étendant suivant ladite première surface de découpe 432.

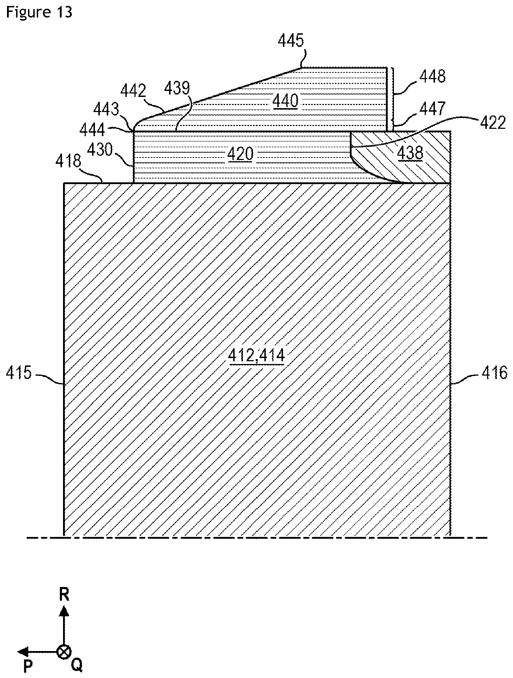

De retour à la Figure 6, la sous-étape 233 est suivie d'une sous-étape 234 d'apposition d'une cale 438 (Figure 13) le long du bord axial défini par drapage 422. Comme visible sur la Figure 13, ladite cale 438 est placée sur la tranche 418 du moule 412 et épouse la forme du bord axial défini par drapage 422. Elle a sensiblement la même épaisseur radiale que le premier empilement 420 et affleure une face extérieure 439 du premier empilement 420.

De retour à la Figure 6, la sous-étape 234 est suivie d'une sous-étape 235 de réalisation d'un deuxième empilement 440 (Figure 13) de couches de mèches de préimprégné par-dessus le premier empilement 420.

Lors de cette sous-étape 235, les mèches de préimprégné sont drapées par couches successives suivant la direction radiale R, à cheval sur le premier empilement 420 et la cale 438. Une première couche (non référencée) est d'abord drapée à même le premier empilement 420 et la cale 438, puis chaque couche suivante est drapée sur la face extérieure de la couche précédente. Par exemple entre 40 et 60 couches sont drapées successivement pour former ce deuxième empilement 440.

La position axiale de chaque couche est définie par référence à un premier bord axial 442, ici un bord avant, du deuxième empilement 440. En d'autres termes, les couches sont positionnées axialement les unes relativement aux autres de sorte que le premier bord axial 442 du deuxième empilement 440 présente un profil radial, c'est-à-dire pris dans un plan radial, prédéfini. Ce premier bord axial 442 prolonge l'un des bords axiaux 422, 430, ici le bord axial usiné 430, du premier empilement 420, c'est-à-dire que l'extrémité intérieure 443 du premier bord axial 442 affleure l'extrémité extérieure 444 du bord axial usiné 430

En particulier, les couches sont positionnées de sorte que ledit premier bord axial 442 présente une extension axiale avec avantageusement, comme représenté, une extrémité extérieure 445 du premier bord axial 442 axialement en retrait par rapport à l'extrémité intérieure 443 du premier bord axial 442. En d'autres termes, l'extrémité extérieure 445 du premier bord axial 442 est décalée axialement vers l'arrière par rapport à l'extrémité intérieure 443. L'extrémité extérieure 445 est en particulier interposée axialement entre l'extrémité intérieure 443 et la cale 438.

Plus particulièrement, les couches sont positionnées de sorte que le premier bord axial 442 ne présente aucun tronçon concave à concavité orientée vers l'intérieur, c'est-à-dire de sorte qu'aucune couche ne soit décalée axialement vers l'avant relativement à la couche inférieure. De plus, les couches sont positionnées de sorte que chaque tronçon du premier bord axial 442 présente une extension axiale, c'est-à-dire que le deuxième empilement 440 ne présente pas de section dans laquelle le premier bord axial 442 s'étend sensiblement suivant un plan radial.

Dans l'exemple représenté, les couches sont positionnées de sorte que le deuxième empilement 440 comprenne une section intérieure 447 dans laquelle le premier bord axial 442 est convexe avec une convexité orientée radialement vers l'extérieur et une section extérieure 448 dans laquelle le premier bord axial 442 est de forme sensiblement tronconique centrée sur l'axe central. Dans la section intérieure 447, le profil radial du premier bord axial 442 est en particulier sensiblement en forme d'arc de cercle. L'inclinaison du premier bord axial dans la section 448 est en particulier sensiblement égale à l'inclinaison de la surface externe 110 de l'anneau d'écartement rotatif 90 et forme par exemple un angle compris entre 20° et 45° avec la tranche 418 du moule 412.

Le profil radial du premier bord axial 442 est sensiblement continu et dérivable à la jonction entre lesdites sections intérieure et extérieure 447, 448.

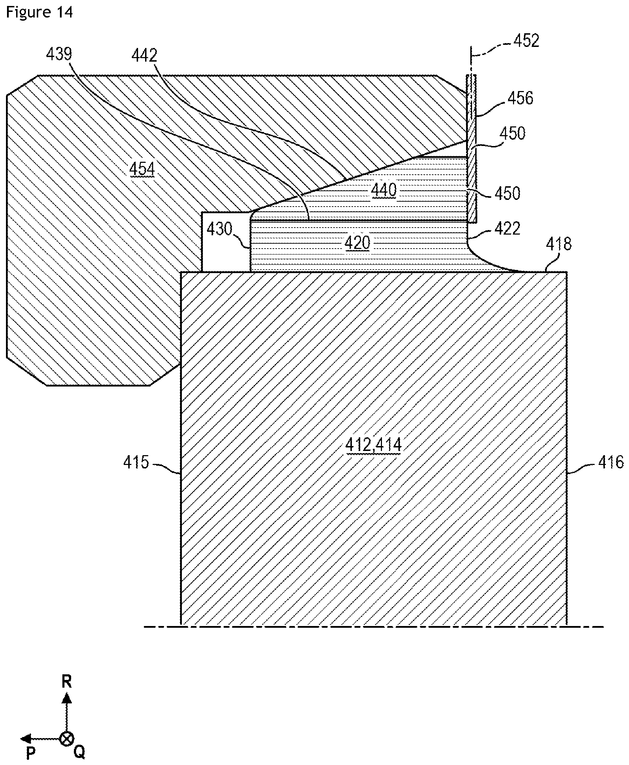

De retour à la Figure 6, la sous-étape 235 est suivie d'une sous-étape 236 d'usinage du deuxième empilement 440. Comme visible sur la Figure 14, lors de cette sous-étape 236, le bord axial du deuxième empilement 440 qui est opposé au bord axial défini par drapage 442, ici donc le bord arrière, est usiné, formant ainsi un deuxième bord axial usiné 450. Cet usinage est en particulier réalisé par découpe franche du deuxième empilement 440 selon une deuxième surface de découpe 452 radiale au moyen d'un outillage de découpe 454 présentant une lame 456 parcourant ladite deuxième surface de découpe 452.

Cette deuxième surface de découpe 452 est différent de la première surface de découpe 432. En particulier, elle est décalée axialement relativement à la première surface de découpe 432. Elle prolonge radialement le bord axial défini par drapage 422 du premier empilement 420, c'est-à-dire qu'elle intersecte la face extérieure 439 du premier empilement 420 au niveau dudit bord axial 422.

De préférence, la cale 438 est retirée préalablement à la mise en œuvre de la sous-étape 236.

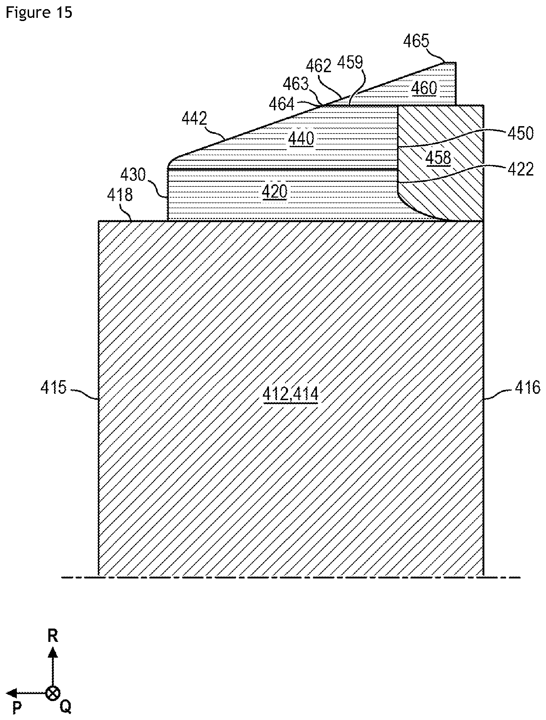

De retour à la Figure 6, la sous-étape 236 est suivie d'une sous-étape 237 d'apposition d'une cale 458 (Figure 15) le long du deuxième bord axial usiné 440. Comme visible sur la

Figure 15, ladite cale 458 est placée sur la tranche 418 du moule 412 et épouse la forme du bord axial défini par drapage 422 du premier empilement 420 et du deuxième bord axial usiné 440. Elle a sensiblement la même épaisseur radiale que le premier empilement 420 et le deuxième empilement 440 pris ensemble et affleure une face extérieure 459 du deuxième empilement 440.

De retour à la Figure 6, la sous-étape 237 est suivie d'une sous-étape 238 de réalisation d'un troisième empilement 460 (Figure 15) de couches de mèches de préimprégné par-dessus le deuxième empilement 440.

Lors de cette sous-étape 237, les mèches de préimprégné sont drapées par couches successives suivant la direction radiale R, à cheval sur le deuxième empilement 440 et la cale 458. Une première couche (non référencée) est d'abord drapée à même le deuxième empilement 440 et la cale 458, puis chaque couche suivante est drapée sur la face extérieure de la couche précédente. Par exemple entre 40 et 60 couches sont drapées successivement pour former ce troisième empilement 460.

La position axiale de chaque couche est définie par référence à un premier bord axial 462, ici un bord avant, du troisième empilement 460. En d'autres termes, les couches sont positionnées axialement les unes relativement aux autres de sorte que le premier bord axial 462 du troisième empilement 460 présente un profil radial, c'est-à-dire pris dans un plan radial, prédéfini. Ce premier bord axial 462 prolonge l'un des bords axiaux 442, 450, ici le bord axial défini par drapage 442, du deuxième empilement 440, c'est-à-dire que l'extrémité intérieure 463 du premier bord axial 462 affleure l'extrémité extérieure 464 du bord axial défini par drapage 442.

En particulier, les couches sont positionnées de sorte que ledit premier bord axial 462 présente une extension axiale avec avantageusement, comme représenté, une extrémité extérieure 465 du premier bord axial 462 axialement en retrait par rapport à l'extrémité intérieure 463 du premier bord axial 462. En d'autres termes, l'extrémité extérieure 465 du premier bord axial 462 est décalée axialement vers l'arrière par rapport à l'extrémité intérieure 463. L'extrémité extérieure 465 est en particulier située radialement au-dessus de la cale 458, c'est-à-dire que le plan radial passant par l'extrémité extérieure 465 coupe la cale 458.

Plus particulièrement, les couches sont positionnées de sorte que le premier bord axial 462 ne présente aucun tronçon concave à concavité orientée vers l'intérieur, c'est-à-dire de sorte qu'aucune couche ne soit décalée axialement vers l'avant relativement à la couche inférieure. De plus, les couches sont positionnées de sorte que chaque tronçon du premier bord axial 462 présente une extension axiale, c'est-à-dire que le troisième empilement 460 ne présente pas de section dans laquelle le premier bord axial 462 s'étend sensiblement suivant un plan radial.

Dans l'exemple représenté, le premier bord axial 462 est de forme sensiblement tronconique centrée sur l'axe central. Son inclinaison est en particulier sensiblement égale à l'inclinaison de la surface externe 110 de l'anneau d'écartement rotatif 90 et forme par exemple un angle compris entre 20° et 45° avec la tranche 418 du moule 412.

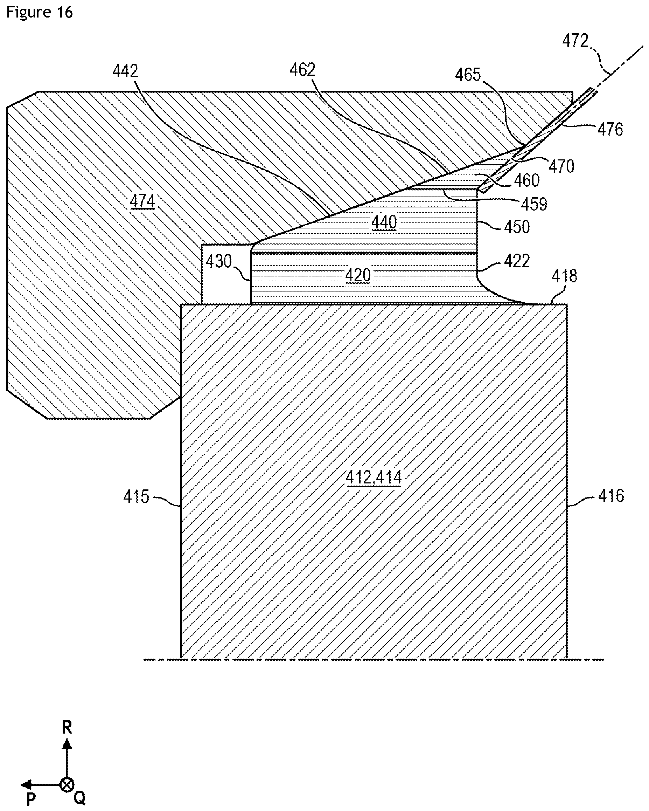

De retour à la Figure 6, la sous-étape 238 est suivie d'une sous-étape 239 d'usinage du troisième empilement 460. Comme visible sur la Figure 16, lors de cette sous-étape 239, le bord axial du troisième empilement 460 qui est opposé au bord axial défini par drapage 462, ici donc le bord arrière, est usiné, formant ainsi un troisième bord axial usiné 470. Cet usinage est en particulier réalisé par découpe franche du troisième empilement 460 selon une troisième surface de découpe 472 au moyen d'un outillage de découpe 474 présentant une lame 476 parcourant ladite troisième surface de découpe 472.

Cette troisième surface de découpe 472 est différent des première et deuxième surfaces de découpe 432, 452. En particulier, cette troisième surface de découpe 472 est une surface tronconique centrée sur l'axe central et s'évasant vers l'arrière. Elle prolonge radialement le bord axial défini par drapage 442 du deuxième empilement 440, c'est-à-dire qu'elle intersecte la face extérieure 459 du deuxième empilement 440 au niveau dudit bord axial défini par drapage 442, et coupe l'extrémité extérieure 465 du bord axial défini par drapage 462 du troisième empilement 460.

De préférence, la cale 458 est retirée préalablement à la mise en œuvre de cette sous-étape 239.

On obtient ainsi la préforme d'insert 410.

On notera que, grâce aux sous-étapes 232 à 239, cette préforme d'insert 410, de petites dimensions et de forme complexe, est obtenue sans mettre en œuvre de stratégie de découpe complexe. En effet, la préforme d'insert 410 est simplement divisée en plusieurs régions 420, 440, 460 concentriques, chacune ayant un bord axial plan ou tronconique, et, pour chacune de ces régions 420, 440, 460, le bord axial présentant la géométrie la plus complexe (par exemple parce qu'il est incurvé alors que l'autre bord est droit, ou parce qu'il est incliné alors que l'autre bord est radial) est formé directement lors du drapage, en programmant simplement le robot de manière à décaler les bandes d'une couche à l'autre, ce qui se fait très facilement. Il suffit d'usiner ensuite le bord axial opposé par découpe franche pour obtenir le bord axial plan ou tronconique. Cette découpe d'un des deux bords axiaux reste en effet nécessaire, car les mèches ont une largeur fixée (typiquement 6,35 mm) qui est la même pour toutes les couches et qui n'est pas petite par rapport à la largeur de la préforme d'insert 410 (chaque couche n'est formée que de quelques mèches déposées côte à côte, le nombre de ces mèches étant typiquement compris entre 1 et 20 et le plus souvent compris entre 3 et 9). Il n'est donc pas possible, lors du drapage, d'adapter la distance entre les bords axiaux en jouant sur la largeur des mèches ou sur le nombre de mèches déposées à chaque couche. De ce fait, à la fin de chaque réalisation 232, 235, 238 d'un empilement de couches, le bord axial qui est opposé au bord défini par drapage se retrouve avec sensiblement la même géométrie que le bord défini par drapage (cet aspect n'est pas représenté sur les figures 11, 13 et 15, qui sont schématiques, néanmoins, en pratique, les deux bords axiaux en question ont effectivement sensiblement la même géométrie). Pour donner à ce bord axial la géométrie souhaitée, qui est différente de celle du bord défini par drapage, on recourt donc à l'usinage dudit bord axial.

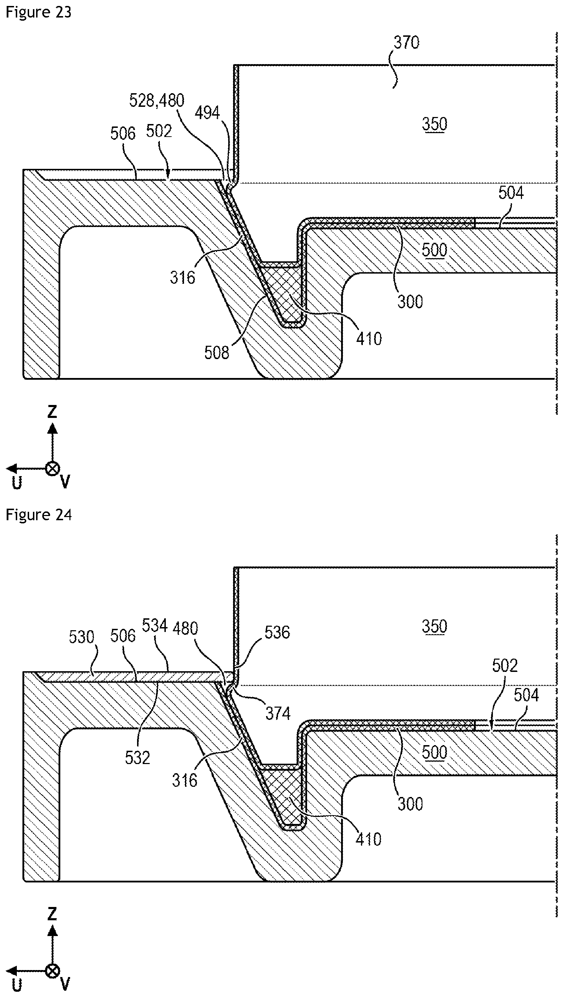

De retour à la Figure 5, le procédé comprend encore, dans l'exemple représenté, une quatrième étape 240 de préparation de préformes de toron 480 (Figure 23). Cette quatrième étape 240 est ici mise en œuvre après les première, deuxième et troisième étapes 210, 220, 230. En variante (non représentée), elle est mise en œuvre parallèlement auxdites étapes 210, 220, 230, ou entre lesdites étapes 210, 220, 230, ou bien encore avant lesdites étapes 210, 220, 230.

En référence à la Figure 17, des mèches de préimprégné 482 sont lors de cette étape 240 empilées successivement dans un moule de toron 484. Ce moule de toron 484 est incurvé avec un rayon de courbure intérieur sensiblement égal au rayon extérieur de l'extrémité arrière 373 de la partie extérieure 372 de la préforme de peau aval 350. Il présente une coupe radiale, c'est-à-dire prise dans un plan orthogonal à la direction de courbure du moule 484, sensiblement en forme de V s'évasant depuis un fond 486 jusqu'à une ouverture 488. Il est délimité entre deux parois 490, 492 convergeant vers le fond 486, chaque paroi 490, 492 s'étendant depuis l'ouverture 488 jusqu'au fond 486. Une première paroi 490 présente un profil radial sensiblement rectiligne. La deuxième paroi 492 présente un profil radial en arc de cercle avec un rayon de courbure sensiblement égal au rayon de courbure extérieur du congé 494 (Figure 22) faisant la jonction entre la partie extérieure 372 et la collerette 374 de la préforme de peau aval 350.

Les mèches sont régulièrement compactées dans le moule 484, lesdites étapes d'empilage et de compactage étant répétées jusqu'au remplissage complet du moule 484. L'empilement de mèches est ensuite démoulé du moule 484 : une obtient ainsi une préforme de toron 480.

Avantageusement, la préforme de toron 480 ne constitue pas un anneau complet : les étapes précédentes sont alors répétées autant de fois que nécessaire pour obtenir un nombre de préformes de toron 480 suffisant pour former un anneau complet. En variante, la préforme de toron 480 constitue un anneau complet : on produit alors lors de l'étape 240 une unique préforme de toron 480.

Les mèches de préimprégné utilisées pour la fabrication de la préforme de peau amont 300, de la préforme de peau aval 350, de la préforme d'insert 410 et, le cas échéant, des préformes de toron 480 ont avantageusement toutes sensiblement la même composition. Lesdites mèches sont typiquement des mèches de fibres unidirectionnelles, lesdites fibres étant des fibres de carbone, par exemple des fibres AS7, noyées dans une résine époxy, par exemple une résine 8552.

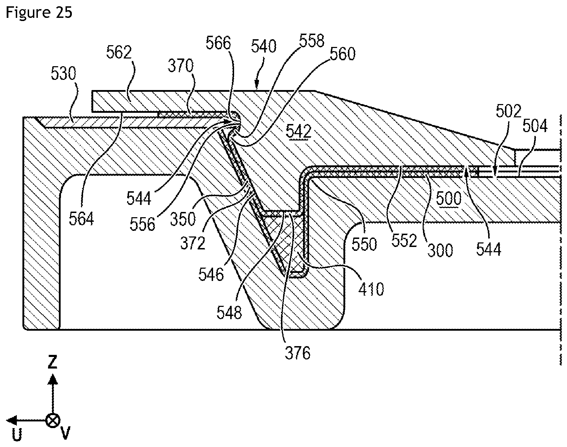

De retour à la Figure 5, le procédé 200 comprend encore, à la suite des étapes 210, 220, 230, 240, une étape 250 de préparation d'une préforme d'anneau d'écartement rotatif 490 (Figure 25).

Cette étape 250 débute par une sous-étape 251 d'insertion de la préforme d'insert 410 entre la préforme de peau amont 300 et la préforme de peau aval 350.

Cette sous-étape 251 commence par la mise en place 252 de la préforme de peau amont 300 dans un moule d'anneau d'écartement rotatif 500 (Figure 18). Comme visible sur la Figure 18, ce moule 500 a une forme de révolution autour d'un axe principal (non représenté). Pour la suite de description, les termes d'orientation s'entendent en référence à un repère cylindrique attaché au moule 500, représenté sur la Figure 18, dans lequel on distingue en chaque point :
- une direction verticale Z parallèle à l'axe principal, allant du bas vers le haut,
- une direction radiale U, orthogonale à la direction verticale Z, reliant l'axe principal audit point et allant de l'intérieur vers l'extérieur, et
- une direction circonférentielle V orthogonale aux directions verticale Z et radiale U.

Le moule 500 présente en particulier une forme discoïdale avec une face supérieure 502 comprenant :
- une platine centrale 504, sensiblement discoïdale,
- une platine périphérique 506 annulaire, et
- entre la platine centrale 504 et la platine périphérique 506, une fente 508 annulaire s'enfonçant vers le bas relativement à la platine centrale 504 et à la platine périphérique 506.

La platine centrale 504 et la platine périphérique 506 sont chacune sensiblement orthogonales à l'axe principal et sensiblement parallèles l'une à l'autre. La platine périphérique 506 est décalée verticalement vers le haut relativement à la platine centrale 504.

La fente 508 est délimitée entre une paroi intérieure 510 sensiblement cylindrique, centrée sur l'axe principal, et une paroi extérieure 512 sensiblement tronconique s'évasant vers le haut, centrée sur l'axe principal, lesdites parois 510, 512 convergeant vers un fond 514 de la fente 508. La paroi intérieure 510 est reliée à la platine centrale 504 par un congé 516 présentant un rayon de courbure extérieur sensiblement égal au rayon de courbure intérieur du congé 100 de l'anneau d'écartement rotatif 90.

La platine centrale 504, le congé 516, la paroi intérieure 510, le fond 514 et la paroi extérieure 512 délimitent ensemble, en creux, une surface complémentaire à la face amont 126 de l'anneau d'écartement rotatif 90.

La préforme de peau amont 300 est ainsi mise en place dans le moule 500 de sorte que sa partie intermédiaire 317 s'étende dans le fond 514 de la fente 508, sa partie extérieure 316 étant en appui contre la paroi extérieure 512 et s'étendant pour partie hors de la fente 508, au-dessus de la platine extérieure 502.

De retour à la Figure 5, la sous-étape 251 comprend également la coupe 253 de la préforme de peau amont 300. Comme visible sur la Figure 19, lors de cette coupe 253, la portion 518 (Figure 18) de la partie extérieure 316 de la préforme de peau amont 300 qui s'étend hors de la fente 508 est retirée.

Toujours en référence à la Figure 5, la sous-étape 251 comprend encore la mise en place 254 de la préforme d'insert 410. Comme visible sur la Figure 20, lors de cette mise en place 254, la préforme d'insert 410 est logée dans la préforme de peau amont 300, au fond de la fente 508, la face avant de ladite préforme 410 étant orientée vers le bas.

La mise en place 254 est suivie de l'enfoncement 255 de la préforme d'insert 410. Comme visible sur la Figure 21, lors de cet enfoncement 255 un poinçon 520 vient appuyer sur la face arrière de la préforme d'insert 410 de manière à l'enfoncer dans la fente 508. Ce poinçon 520 présente une face d'appui 522 plane, orientée vers le bas, avec un bord intérieur 524 et un bord extérieur 524 chacun incurvé vers le haut. Cette étape permet de conformer la face arrière de la préforme d'insert 410 de manière à ce qu'elle épouse mieux la préforme de peau aval 350.

A l'enfoncement 255 succède la mise en place 256 de la préforme de peau aval 350. Comme visible sur la Figure 22, lors de cette mise en place 256, la préforme de peau aval 350 est déposée par-dessus la préforme de peau amont 300 et la préforme d'insert 410, sa face avant orientée vers le bas. La partie extérieure 372 de la préforme de peau aval 350 est placée contre la partie extérieure 316 de la préforme de peau amont 300 et sa partie intermédiaire 376 est placée contre la face arrière de la préforme d'insert 410. La partie arrière 370 de la préforme de peau aval 350 s'étend alors sensiblement verticalement et un espace 528 annulaire reste dégagé entre l'extrémité arrière de la partie extérieure 316 de la préforme de peau amont 300 et le congé 494 faisant la jonction entre la partie extérieure 372 et la collerette 374 de la préforme de peau aval 350.

La préforme d'insert 410 se retrouve ainsi insérée entre la préforme peau amont 300 et la préforme de peau aval 350.

La sous-étape 251 est suivie d'une sous-étape 257 de mise en place des préformes de toron 480. Comme visible sur la Figure 23, lors de cette sous-étape 257, les préformes de toron 480 sont placées l'espace annulaire 528 entre l'extrémité arrière de la partie extérieure 316 de la préforme de peau amont 300 et le congé 494 de la préforme de peau aval 350 de manière à combler ledit espace annulaire 528.

A la sous-étape 257 succède une sous-étape 258 de mise en place d'un insert de moule 530 (Figure 24). Comme visible sur la Figure 24, lors de cette sous-étape 258, un insert de moule 530 est placé sur la platine périphérique 506. Cet insert 530 est placé de manière à recouvrir la platine périphérique 506, l'extrémité arrière de la partie extérieure 316 de la préforme de peau amont 300, les préformes de toron 480 et la collerette 374 de la préforme de peau aval 350. Il vient en contact avec la base de la partie arrière 370 de la préforme de peau aval 350.

Cet insert 530 est annulaire, avec un rayon de courbure intérieur sensiblement égal au rayon de courbure extérieur de la partie arrière 370 de la préforme de peau aval 350. Il est sensiblement plat, avec une grande face inférieure 532 en contact avec la platine périphérique 506, une grande face supérieure 534 opposée à la grande face inférieure 532 et sensiblement parallèle à cette dernière, et un bord intérieur 536 reliant lesdites grandes faces 532, 534. L'épaisseur de l'insert 530 est sensiblement égale à la distance entre les extrémités 116, 118 de l'appendice 114 de l'anneau d'écartement rotatif 90.

L'insert 530 est avantageusement formé de plusieurs secteurs (non représentés) juxtaposés les uns aux autres.

La sous-étape 258 est finalement suivie d'une sous-étape 259 de rabattage de la préforme de peau aval 350. Comme visible sur la Figure 25, lors de cette sous-étape 259 la partie arrière 370 de la préforme de peau aval 350 est rabattue vers l'extérieur, par-dessus de l'insert de moule 530.

Pour permettre ce rabattage, une contreforme 540 est utilisée. Cette contreforme 540 comprend un noyau 542 présentant une face inférieure 544 comportant, de l'extérieur vers l'intérieur :
- une partie extérieure 546 tronconique s'évasant vers le haut,
- une partie intermédiaire 548 annulaire, sensiblement plane, s'étendant sensiblement suivant un plan radial et faisant saillie vers l'intérieur depuis une extrémité inférieure de la partie extérieure 546,
- un congé annulaire 550 à concavité orientée vers l'intérieur et vers le bas s'étendant vers le haut depuis une extrémité intérieure de la partie intermédiaire 548, et
- une partie intérieure 552 annulaire, sensiblement plane, s'étendant sensiblement suivant un plan radial en retrait de la partie intermédiaire 548, dans le prolongement d'une extrémité intérieure du congé 550.

Le noyau 542 comprend également une face extérieure 554 comprenant, du haut vers le bas :
- une portion cylindrique 556 de diamètre inférieur au diamètre extérieur de la face inférieure 544,
- une collerette 558 s'étendant radialement vers l'extérieur depuis une extrémité inférieure de la portion cylindrique 556 et définissant un épaulement orienté vers le haut, et
- un congé 560 à convexité orientée vers l'extérieur reliant une extrémité extérieure de la collerette 558 à une extrémité extérieure de la partie extérieure 546 de la face inférieure 544.

Le noyau 542 a une forme complémentaire à la face arrière de la préforme de peau aval 350.

La contreforme 540 comprend également un anneau de rabattage 562. Ledit anneau de rabattage 562 fait saillie radialement vers l'extérieur depuis le noyau 542, à distance de la collerette 558. Il présente une face inférieure 564 sensiblement plane délimitant avec la collerette 558 et la portion cylindrique 556 de la face extérieure 554 du noyau 542 une gorge extérieure 566 dont le fond est constitué par la portion cylindrique 556. La largeur de ladite gorge extérieure 566, constituée par la distance de l'anneau de rabattage 562 à la collerette 558, est sensiblement égale à l'épaisseur de l'insert de moule 530 augmentée du double de l'épaisseur de la préforme de peau aval 350.

La contreforme 540 est de préférence constituée de silicone. Elle est avantageusement constituée de plusieurs secteurs (non représentés).

Pour rabattre la partie arrière 370 de la préforme de peau aval 350, la contreforme 540 est mise en place de sorte que la gorge 566 vienne s'emboîter sur le bord intérieur 536 de l'insert de moule 530, la partie extérieure 546 et la partie intermédiaire 548 de la face avant 544 du noyau 542 venant en appui respectivement contre la partie extérieure 372 et la partie intermédiaire 376 de la préforme de peau aval 350. Ce faisant, l'anneau de rabattage 562 vient appuyer contre la partie arrière 370 de la préforme de peau aval 350 et la rabattre contre l'insert de moule 530.

On obtient ainsi une préforme d'anneau d'écartement rotatif.

L'étape 250 est enfin suivie d'une étape 260 de cuisson de la préforme d'anneau d'écartement rotatif. Lors de cette étape 260, la préforme d'anneau d'écartement rotatif est laissée dans le moule 500, avec l'insert de moule 530 et la contreforme 540 en place, et chauffée de manière conventionnelle à une température adaptée pour permettre la réticulation de la matrice et le durcissement de la préforme. La préforme est ensuite refroidie et démoulée : on obtient ainsi l'anneau d'écartement rotatif 90.

Du fait que la contreforme 540 est en silicone, elle tend à se dilater lors de la cuisson. Elle vient donc appuyer contre la préforme de peau aval 350 lors de la cuisson, ce qui permet d'assurer, à l'issue de la cuisson, une excellente cohésion de la peau amont 122, de la peau aval 123 et de l'insert 124 les uns avec les autres.

Ainsi, grâce au procédé 200 décrit ci-dessus, il est possible d'obtenir de manière simple et à moindre coût un anneau d'écartement rotatif 90 en matériau composite présentant d'excellentes propriétés mécaniques. Ce procédé 200 est de plus facilement répétable, ce qui permet une grande homogénéité dans les anneaux d'écartement rotatifs obtenus au moyen de ce procédé.

En particulier, le procédé 200 résout de manière astucieuse le problème de l'application de la technique de drapage par placement automatique de fibres à la fabrication d'un anneau d'écartement rotatif. Notamment, le fait de procéder à un thermoformage 214, 224 des préformes 300, 350 après le drapage 212, 222 permet de résoudre le problème de la gestion des régions concaves de petites dimensions. Ce thermoformage 214, 224 est permis par la dépose des mèches, durant le drapage 212, 222, suivant des directions formant des angles non nul avec la direction circonférentielle, alors même qu'un tel agencement des mèches est contre-intuitif puisqu'allant à l'encontre de l'objectif de résistance mécanique habituellement recherché sur ce type de pièces. Cet agencement est lui-même permis par le découplage opéré entre les fonctions de maintien de l'ensemble de la pièce et de définition de la surface vue par le flux d'air, confiées aux peaux 122, 123, avec la fonction de renfort mécanique, confiée à l'insert 124, pour lequel les fibres sont, elles, déposées suivant la direction circonférentielle.

## Revendications

1. Procédé (200) de fabrication d'un anneau d'écartement (90) en matériau composite pour soufflante de turbomachine, ledit anneau d'écartement (90) comprenant une peau amont (122) délimitant une face amont (126) de l'anneau d'écartement (90) lorsqu'il est monté sur la turbomachine, une peau aval (123) délimitant une face aval (128) de l'anneau d'écartement (90) lorsqu'il est monté sur la turbomachine, et un insert (124) annulaire logé entre les peaux amont et aval (122, 123), le procédé de fabrication (200) comprenant les étapes suivantes :
- préparation (210) d'une préforme de peau amont (300),
- préparation (220) d'une préforme de peau aval (350),
- préparation (230) d'une préforme d'insert (410),
- insertion (251) de la préforme d'insert (410) entre la préforme de peau amont (300) et la préforme de peau aval (350) de manière à former une préforme d'anneau d'écartement rotatif, et
- cuisson (260) de la préforme d'anneau d'écartement rotatif,
dans lequel la préparation (210) de la préforme de peau amont (300) et/ou la préparation (220) de la préforme de peau aval (350) comprend le drapage (212, 222) de mèches de préimprégné sur un moule de peau (302, 352) par placement automatique de fibres,
dans lequel la préparation (230) de la préforme d'insert (410) comprend le drapage (231) de mèches de préimprégné sur un moule d'insert (412) par placement automatique de fibres, le moule d'insert (412) ayant une forme de disque (414), les mèches de préimprégné étant drapées sur une tranche (418) dudit disque (414),
dans lequel le disque (414) est de révolution autour d'un axe central, un repère cylindrique est attaché au moule d'insert (412) avec en chaque point une direction axiale (P) parallèle à l'axe central, une direction radiale (R) reliant l'axe central audit point et une direction circonférentielle (Q) orthogonale aux directions axiale et radiale, et chaque mèche de préimprégné est drapée sensiblement parallèlement à la direction circonférentielle (Q),
dans lequel le drapage (231) de mèches de préimprégné sur le moule d'insert (412) comprend :
- la réalisation (232, 235, 238) d'au moins un empilement (420, 440, 460) de couches de mèches de préimprégné empilées suivant la direction radiale (R), ledit empilement (420, 440, 460) présentant un bord axial défini par drapage (422, 442, 462) qui présente une extension axiale, et
- l'usinage (233, 236, 239) d'un bord axial usiné (430, 450, 470) de l'empilement (420, 440, 460), à l'opposé du bord axial défini par drapage (422, 442, 462), par découpe franche de l'empilement (420, 440, 460).

2. Procédé de fabrication (200) selon la revendication 1, dans lequel le drapage (212, 222) de mèches de préimprégné sur le moule de peau (302, 352) produit une ébauche de préforme (304, 354) annulaire, la préparation (210) de la préforme de peau amont (300) et/ou la préparation (220) de la préforme de peau aval (350) comprenant, suite audit drapage (212, 222), la mise en forme (214, 224) de l'ébauche de préforme (304, 354) de manière à former la préforme de peau amont (300), respectivement la préforme de peau aval (350).

3. Procédé de fabrication (200) selon la revendication 1 ou 2, dans lequel le moule de peau (302, 352) a une forme de révolution centrée sur un axe de révolution, un repère cylindrique étant attaché au moule de peau (302, 352) avec en chaque point une direction axiale (A, A") parallèle à l'axe de révolution, une direction radiale (B, B'') reliant l'axe de révolution audit point et une direction circonférentielle (C, C") orthogonale aux directions axiale et radiale, chaque mèche de préimprégné étant drapée suivant une direction formant en chaque point un angle non nul avec la direction circonférentielle (C, C'') locale.

4. Procédé de fabrication (200) selon l'une quelconque des revendications précédentes, dans lequel, pour au moins un empilement (420, 440), le bord axial défini par drapage (422) est incurvé, le bord axial usiné (430) étant droit, ou le bord axial défini par drapage (442) est incliné, le bord axial usiné (450) étant radial.

5. Procédé de fabrication (200) selon l'une quelconque des revendications précédentes, dans lequel plusieurs empilements (420, 440, 460) sont réalisés, lesdits empilements (420, 440, 460) comprenant un empilement intérieur (420, 440) et un empilement extérieur (440, 460) radialement superposé à l'empilement intérieur (420, 440), le bord axial usiné (430, 450) de l'empilement intérieur (420, 440) étant obtenu par découpe franche de l'empilement intérieur (420, 440) selon une surface de découpe primaire (432, 452) et le bord axial usiné (450, 470) de l'empilement extérieur (440, 460) étant obtenu par découpe franche de l'empilement extérieur (440, 460) selon une surface de découpe secondaire (452, 472) différente de la surface de découpe primaire (432, 452).

6. Procédé de fabrication (200) selon la revendication 5, dans lequel le bord axial défini par drapage (442) de l'empilement extérieur (440) prolonge radialement le bord axial usiné (430) de l'empilement intérieur (420), la surface de découpe secondaire (452) prolongeant radialement le bord axial défini par drapage (422) de l'empilement intérieur (420), ou le bord axial défini par drapage (462) de l'empilement extérieur (460) prolonge radialement le bord axial défini par drapage (442) de l'empilement intérieur (440), la surface de découpe secondaire (472) prolongeant radialement le bord axial usiné (450) de l'empilement intérieur (440).

7. Procédé de fabrication (200) selon l'une quelconque des revendications précédentes, dans lequel le bord axial usiné (430, 450, 470) est obtenu par découpe franche de l'empilement (420, 440, 460) selon une surface de découpe (432, 452, 472) radiale ou tronconique.

8. Anneau d'écartement (90) obtenu par un procédé de fabrication (200) selon l'une quelconque des revendications 1 à 7.

## Patentansprüche

1. Verfahren (200) zur Herstellung eines Distanzrings (90) aus Verbundmaterial für ein Turbotriebwerkgebläse, wobei der Distanzring (90) eine stromaufwärtige Außenhaut (122), die eine stromaufwärtige Seite (126) des Distanzrings (90) begrenzt, wenn er an dem Turbotriebwerk montiert ist, eine stromabwärtige Außenhaut (123), die eine stromabwärtige Seite (128) des Distanzrings (90) begrenzt, wenn er an dem Turbotriebwerk montiert ist, und einen ringförmigen Einsatz (124), der zwischen der stromaufwärtigen und der stromabwärtigen Außenhaut (122, 123) gelagert ist, umfasst, wobei das Herstellungsverfahren (200) die folgenden Schritte umfasst:
- Vorbereiten (210) einer Vorform (300) einer stromaufwärtigen Außenhaut,
- Vorbereiten (220) einer Vorform (350) einer stromabwärtigen Außenhaut,
- Vorbereiten (230) einer Einsatzvorform (410),
- Einsetzen (251) der Einsatzvorform (410) zwischen der Vorform (300) einer stromaufwärtigen Außenhaut und der Vorform (350) einer stromabwärtigen Außenhaut, um eine Vorform eines drehbaren Distanzrings zu bilden, und
- Brennen (260) der Vorform eines drehbaren Distanzrings,
wobei das Vorbereiten (210) der Vorform (300) einer stromaufwärtigen Außenhaut und/oder das Vorbereiten (220) der Vorform (350) einer stromabwärtigen Außenhaut das Drapieren (212, 222) mit Prepreg-Bändern über eine Außenhautform (302, 352) durch automatisches Einbringen von Fasern umfasst,
wobei das Vorbereiten (230) der Einsatzvorform (410) das Drapieren (231) mit Prepreg-Bändern über eine Einsatzform (412) durch automatisches Einbringen von Fasern umfasst, wobei die Einsatzform (412) eine Scheibenform (414) aufweist, wobei die Prepreg-Bänder über ein Teilstück (418) der Scheibe (414) drapiert werden,
wobei die Scheibe (414) eine Rotationssymmetrie um eine Mittelachse aufweist, wobei an der Einsatzform (412) eine zylindrische Markierung, mit in jedem Punkt einer parallelen zur mittleren Achse axialen Richtung (P), einer die Mittelachse mit dem Punk verbundenen radialen Richtung (R) und einer zu den axialen und radialen Richtungen orthogonalen Umfangsrichtung (Q), angebracht ist, und jedes Prepreg-Band im Wesentlichen parallel zur Umfangsrichtung (Q) drapiert wird,
wobei das Drapieren (231) mit Prepreg-Bändern über die Einsatzform (412) umfasst:
- Ausbilden (232, 235, 238) mindestens eines Stapels (420, 440, 460) von Prepreg-Bänderschichten, die in der radialen Richtung (R) gestapelt sind, wobei der Stapel (420, 440, 460) eine durch das Drapieren (422, 442, 462) definierte axiale Kante aufweist, die eine axiale Erstreckung aufweist, und
- Bearbeiten (233, 236, 239) einer bearbeiteten axialen Kante (430, 450, 470) des Stapels (420, 440, 460) gegenüber der durch das Drapieren (422, 442, 462) definierten axialen Kante, durch glattes Zuschneiden des Stapels (420, 440, 460).

2. Herstellungsverfahren (200) nach Anspruch 1, wobei das Drapieren (212, 222) mit Prepreg-Bändern über die Außenhautform (302, 352) einen ringförmigen Vorformrohling (304, 354) erzeugt, wobei das Vorbereiten (210) der Vorform (300) einer stromaufwärtigen Außenhaut und/oder das Vorbereiten (220) der Vorform (350) einer stromabwärtigen Außenhaut im Anschluss an das Drapieren (212, 222) das Formgeben (214, 224) des Vorformrohlings (304, 354) umfasst, um die Vorform (300) einer stromaufwärtigen Außenhaut bzw. die Vorform (350) einer stromabwärtigen Außenhaut zu bilden.

3. Herstellungsverfahren (200) nach Anspruch 1 oder 2, wobei die Außenhautform (302, 352) eine Rotationsform aufweist, die auf eine Rotationsachse zentriert ist, wobei an der Außenhautform (302, 352) eine zylindrische Markierung mit in jedem Punkt einer parallelen zur Rotationsachse axialen Richtung (A, A"), einer die Rotationsachse mit dem Punkt verbundenen radialen Richtung (B, B") und einer zu den axialen und radialen Richtungen orthogonalen Umfangsrichtung (C, C") angebracht ist, wobei jedes Prepreg-Band in einer Richtung drapiert wird, die in jedem Punkt einen Winkel ungleich null mit der lokalen Umfangsrichtung (C, C") bildet.

4. Herstellungsverfahren (200) nach einem der vorhergehenden Ansprüche, wobei für mindestens einen Stapel (420, 440) die durch das Drapieren (422) definierte axiale Kante gekrümmt ist, während die bearbeitete axiale Kante (430) gerade ist, oder die durch das Drapieren (422) definierte axiale Kante geneigt ist, während die bearbeitete axiale Kante (450) radial ist.

5. Herstellungsverfahren (200) nach einem der vorhergehenden Ansprüche, wobei mehrere Stapel (420, 440, 460) ausgebildet werden, wobei die Stapel (420, 440, 460) einen inneren Stapel (420, 440) und einen äußeren Stapel (440, 460), der dem inneren Stapel (420, 440) radial überlagert ist, umfassen, wobei die bearbeitete axiale Kante (430, 450) des inneren Stapels (420, 440) durch glattes Zuschneiden des inneren Stapels (420, 440) gemäß einer primären Schneidfläche (432, 452) erzielt wird, und die bearbeitete axiale Kante (450, 470) des äußeren Stapels (440, 460) durch glattes Zuschneiden des äußeren Stapels (440, 460) gemäß einer sekundären Schneidfläche (452, 472), die anders als die primäre Schneidfläche (432, 452) ist, erzielt wird.

6. Herstellungsverfahren (200) nach Anspruch 5, wobei die durch das Drapieren (442) definierte axiale Kante des äußeren Stapels (440) die bearbeitete axiale Kante (430) des inneren Stapels (420) radial verlängert, während die sekundäre Schneidfläche (452) die durch das Drapieren (422) definierte axiale Kante des inneren Stapels (420) radial verlängert, oder die durch das Drapieren (462) definierte axiale Kante des äußeren Stapels (460) die durch das Drapieren (442) definierte axiale Kante des inneren Stapels (440) radial verlängert, während die sekundäre Schneidfläche (472) die bearbeitete axiale Kante (450) des inneren Stapels (440) radial verlängert.

7. Herstellungsverfahren (200) nach einem der vorhergehenden Ansprüche, wobei die bearbeitete axiale Kante (430, 450, 470) durch glattes Zuschneiden des Stapels (420, 440, 460) entlang einer radialen oder kegelstumpfförmigen Schneidfläche (432, 452, 472) erzielt wird.

8. Distanzring (90), der durch ein Herstellungsverfahren (200) nach einem der Ansprüche 1 bis 7 erzielt wird.

## Claims

1. A method (200) for manufacturing a spacer ring (90) made of composite material for a turbine engine fan, said spacer ring (90) comprising an upstream skin (122) delimiting an upstream face (126) of the spacer ring (90) when it is mounted on the turbine engine, a downstream skin (123) delimiting a downstream face (128) of the spacer ring (90) when it is mounted on the turbine engine, and an annular insert (124) housed between the upstream and downstream skins (122, 123), the manufacturing method (200) comprising the following steps:
- preparing (210) an upstream skin preform (300),
- preparing (220) a downstream skin preform (350),
- preparing (230) an insert preform (410),
- inserting (251) the insert preform (410) between the upstream skin preform (300) and the downstream skin preform (350) so as to form a rotating spacer ring preform, and
- baking (260) the rotating spacer ring preform,
wherein preparing (210) the upstream skin preform (300) and/or preparing (220) the downstream skin preform (350) comprises drape forming (212, 222) prepreg tows over a skin mould (302, 352) by automatic fibre placement,
wherein preparing (230) the insert preform (410) comprises drape forming (231) prepreg tows over an insert mould (412) by automatic fibre placement, the insert mould (412) having a disc shape (414), the prepreg tows being drape formed over a rim (418) of said disc (414),
wherein the disc (414) is rotationally symmetric about a central axis, a cylindrical reference frame is associated with the insert mould (412) with, at each point, an axial direction (P) parallel to the central axis, a radial direction (R) joining the central axis to said point and a circumferential direction (Q) orthogonal to the axial and radial directions, and each prepreg tow is drape formed substantially parallel to the circumferential direction (Q).
wherein drape forming (231) prepreg tows over the insert mould (412) comprises:
- producing (232, 235, 238) at least one stack (420, 440, 460) of layers of prepreg tows stacked in the radial direction (R), said stack (420, 440, 460) having an axial edge defined by drape forming (422, 442, 462) which has an axial extension, and
- machining (233, 236, 239) a machined axial edge (430, 450, 470) of the stack (420, 440, 460), opposite the axial edge defined by drape forming (422, 442, 462), by clean cutting of the stack (420, 440, 460).

2. The manufacturing method (200) according to claim 1, wherein drape forming (212, 222) of prepreg tows over the skin mould (302, 352) produces an annular preform blank (304, 354), preparing (210) the upstream skin preform (300) and/or preparing (220) the downstream skin preform (350) comprising, following said drape forming (212, 222), shaping (214, 224) of the preform blank (304, 354) so as to form, respectively, the upstream skin preform (300) and/or the downstream skin preform (350).

3. The manufacturing method (200) according to claim 1 or 2, wherein the skin mould (302, 352) has a rotationally symmetric shape centred on an axis of revolution, a cylindrical reference frame being associated with the skin mould (302, 352) with, at each point, an axial direction (A, A") parallel to the axis of revolution, a radial direction (B, B") joining the axis of revolution to said point and a circumferential direction (C, C") orthogonal to the axial and radial directions, each prepreg tow being drape formed in a direction forming, at each point, a non-zero angle with the local circumferential direction (C, C").

4. The manufacturing method (200) according to any one of the preceding claims, wherein, for at least one stack (420, 440), the axial edge defined by drape forming (422) is curved, the machined axial edge (430) being straight, or the axial edge defined by drape forming (442) is inclined, the machined axial edge (450) being radial.

5. The manufacturing method (200) according to any one of the preceding claims, wherein a plurality of stacks (420, 440, 460) are produced, said stacks (420, 440, 460) comprising an inner stack (420, 440) and an outer stack (440, 460) radially superimposed on the inner stack (420, 440), the machined axial edge (430, 450) of the inner stack (420, 440) being obtained by a clean cut of the inner stack (420, 440) along a primary cutting surface (432, 452) and the machined axial edge (450, 470) of the outer stack (440, 460) being obtained by a clean cut of the outer stack (440, 460) along a secondary cutting surface (452, 472) different from the primary cutting surface (432, 452).

6. The manufacturing method (200) according to claim 5, wherein the axial edge defined by drape forming (442) of the outer stack (440) radially extends the machined axial edge (430) of the inner stack (420), the secondary cut surface (452) radially extending the axial edge defined by drape forming (422) of the inner stack (420), or the axial edge defined by drape forming (462) of the outer stack (460) radially extends the axial edge defined by drape forming (442) of the inner stack (440), the secondary cutting surface (472) radially extending the machined axial edge (450) of the inner stack (440).

7. The manufacturing method (200) according to any one of the preceding claims, wherein the machined axial edge (430, 450, 470) is obtained by clean cutting of the stack (420, 440, 460) along a radial or frustoconical cutting surface (432, 452, 472).

8. A spacer ring (90) obtained by a manufacturing method (200) according to any one of claims 1 to 7.
